# EUROPEAN PATENT SPECIFICATION

(11) **EP 2 871 952 B1**
(45) Date of publication and mention of the grant of the patent: **01.09.2021**
(21) Application number: 13734100.4
(22) Date of filing: 05.07.2013
(51) Int. Cl.: A01N 51/00, A01N 53/00, A01N 43/30, A01N 25/04, A01N 25/28, A01P 7/04

(54) **INSECTICIDAL SUSPOEMULSIONS COMPRISING MICROCAPSULES**
INSEKTIZIDSUSPOEMULSIONEN ENTHALTEND MIKROKAPSELN
SUSPOEMLUSIONES d'INSECTICIDE CONTENAT DE MICROCAPSULES

(30) Priority: 11.07.2012 IT MI20121206
(43) Date of publication of application: 20.05.2015
(73) Proprietor: Endura S.p.A., 40121 Bologna (IT)
(72) Inventor: GOBBI, Carlotta, I-48121 Ravenna (IT); CAMPANATI, Matteo, I-40100 Bologna (IT); BORZATTA, Valerio, I-40127 Bologna (IT)
(74) Representative: Masala, Gian Tomaso
(86) International application number: PCT/EP2013/064242
(87) International publication number: WO 2014/009269

(56) References cited:
- EP-A1- 2 589 290
- WO-A1-97/14308
- WO-A1-2006/111553
- WO-A1-2006/111839
- US-A1- 2010 285 960

## Description

The present invention relates to the use of formulations consisting essentially of suspo-emulsions consisting of a suspension of microcapsules containing at least one active ingredient selected from the pyrethroid, and/or neonicotinoid classes and at least one synergistic agent, and an emulsion comprising at least one active ingredient of the above classes and at least one synergistic agent, the formulations showing a residual killing effect, at three months from the application, also at six and nine months, combined with a high knockdown effect within one hour from the contact with the insect and with a high killing effect after 24 h from the application and showing a long term stability.

More specifically the present invention relates to the use of formulations consisting of suspo-emulsions of the invention with a very prolonged killing effect on insects, suitable to professional, domestic, public hygiene applications to control carriers of pathogenic agents, for example malaria and dengue, in environment disinfestation for example stables, sheds for domestic animals, residential and industrial areas.

Still more particularly the present invention relates to the use of the suspoemulsions of the invention in insecticide formulations preferably against blattodea arthropods, for example cockroaches; dipterons for example flies; hymenopters, for example mosquitos; isoptera, for example ants; siphonoptera, for example fleas; acari, for example spiders; beetles, for example cockchagers, isopters, for example termites; dermopterans, for example, earwigs; rynchotes, for example, bugs, etc.

Many products to combat insects, in particular mosquitos, are known in the art. Generally the products used can act in a preventive and curative way.

Among the products acting in preventive way, it can mention, for example compositions based on compounds such as ammonia or vegetable extracts. These products have a good efficacy but show drawbacks, for example a skin inflammation and a limited duration of the effect in time.

Other products with preventive efficacy are the repellents for topical application that stave off insects, for example the commercial product AUTAN® and OFF®. These products or the formulations thereof are directly applied on the skin with possible irritating effects and allergic reactions and therefore with a discomfort feeling.

Other products with preventive efficacy are represented by the insecticidal coils that are cellulose derivatives based compounds usually containing pyrethrum and/or pyrethroids. A drawback of these products is that the insecticidal active ingredient is released in the environment and therefore can be inhalated.

Other products with preventive activity are also represented by insecticidal tablets (mats) or by heated liquid exhalant agents (LED). These devices contain insecticides in an organic solvent that is evaporated. The drawback of these products is similar to that previously mentioned of the inhalation.

Other products having a preventive activity are antilarvals based on Bacillus thuringiensis and are applied in stagnant water environments such as for example manholes. The drawback of these products is their poor residuality and washing away resistance.

Formulations containing microcapsules having the most various characteristics that are used in the above mentioned professional field, are known in the prior art. However formulations formed by suspo-emulsions containing microcapsules and active and synergistic ingredients outside the microcapsules with a prolonged activity also atsix and nine months, high stability and reduced toxicity for the above uses, for example in professional fields, are not known. For example formulations with a prolonged residual activity as the product Demand CS® or Icon CS® are effective for three months, but after this time they show a reduced activity.

Wege P.J. et al. in Proceeding of the Third International Conference on Urban Pests, WM H. Robinson, F. Rettlich and G. W. Rambo (Editors), 1999, describes microcapsules with polyurea shell containing Lambda-Cyhalothrin. The capsule shell is highly crosslinked, with a high ratio polymethylene-poly-polyphenylisocyanate (PMPPI):toluene diisocyanate (TDI). This confers a relatively low permeability so that the active ingredient remains in the capsule. It is stated that the microcapsules remain intact for a long time on various surfaces allowing to control populations of insects as flies, mosquitos, cockroaches and other arthropods by means of a single application. The data reported by Wege show that the killing effect is maintained up to 12 weeks. This article gives no indication on the residual activity of the described formulation at three months, also at six and nine months from the application.

Shirley I. M. et al. in Pest Manag. Sci, 57,129-132 (2001) describes microcapsules with both slow or quick release of the active ingredient. As regards the slow release of the active ingredient, the article reports that these products are effective up to three months.

Sheu E.Y. in 2000 BCPC Symposium Proceedings No. 74 describes the Zeon technology of Lambda Cyhalothrin microencapsulation that represents a quick release microencapsulation technique. It is based on the interfacial polymerization by using polymethylene-polyphenylisocyanate (PMPPI), that acts as monomer and toluene diisocyanate (TDI) that acts as crosslinking agent. The microcapsule sizes are comprised between 2 and 15 µm. The so obtained product has a release rate of the active ingredient comparable to that of an emulsifiable concentrate (EC) but a significantly lower toxicity for non-target organisms, besides an equivalent efficacy on the field.

Patent application WO 97/14,308 describes compositions of microcapsules containing Cypermethrin isomers (for example Beta and Theta Cypermethrin) with decreased toxicity but with good insecticidal activity. The material of the capsule shell is formed by one or more of the following components: cellulose derivatives, starch, gelatin, resins, polyamides, polyesters, polycarbonates, polyurethanes, polyureas. Inside the microcapsules together with the active ingredient also synergistic agents, preferably piperonyl butoxide (PBO), sesame oil can be present, and other excipients. The microcapsule sizes range from 1 to 2000 µm and can be obtained by coacervation or by interfacial polymerization. The release tests reported in the Tables of patent application WO 97/14,308 have been carried out with microcapsules obtained by coacervation. The Tables show that surfaces treated with the following formulations:
- a suspension concentrate of Cypermethrin capsules having ethylcellulose walls and a diameter of 132 µm,
- a product under the form of wettable powder containing Cypermethrin capsules having carbamide-urea-formaldeyde walls and a diameter of 168 µm,
maintain an effective killing effect on domestic flies for 25 weeks.

It has been found by the Applicant that the formulations prepared according to this patent application and used in the Tables have not a high stability. This represents a drawback since it is desirable to obtain microcapsules having a long activity, also of nine months, and formulations thereof having a long term stability, of two years or more according to CIPAC MT 46.3 method. For the other polymers of the microcapsule shell no data are reported showing that the microcapsules obtained by interfacial polymerization have a long residual activity at three months and also at six and nine months.

USP 4,285,720 describes a process for preparing microcapsules. The process is carried out by interfacial polymerization and comprises the hydrolysis of an isocyanate monomer to form in situ an amine reacting with an isocyanate monomer to form the polyurea wall of the microcapsule. The process allows to obtain the microencapsulated material and avoid the addition of amine monomers for obtaining polyurea. The process comprises the following steps:
- preparation of an organic phase (i) comprising the material that must be encapsulated and a polyisocyanic monomer,
- preparation of the aqueous phase (ii) comprising water, a surfactant and a protective colloid,
   the dispersion being obtained by mixing (i) with (ii) at room temperature,
- heating of the dispersion at a temperature from about 40°C to 90°C to obtain the polyurea microcapsule containing inside the encapsulated material.
The microcapsule average sizes range from 0.5 µm to 4,000 µm. The microcapsules prepared in the examples of this patent have sizes ranging from 1 to 30 µm. The microcapsules described in this document, as all the microcapsules of the prior art, have a prolonged effect in time with respect to the compositions therein indicated, such as emulsifiable concentrates (EC) or wettable powders (WP) that, on the contrary, have a short term efficacy, generally of the order of some days. The polyisocyanic monomers that can be used are aromatic polyisocyanates, aliphatic diisocyanates, high molecular weight linear diisocyanates and isocyanate prepolymers. A list of monomers that can be used is reported and it is stated that it is desirable and particularly preferable to use a combination of the mentioned isocyanates to have good properties of the controlled release of the active ingredient.

Also in this patent no indications are given on the residual activity of the formulation, both as knock-down and killing activity, at three months, also at six and nine months from the application.

USP 4,497,793 describes a process for preparing microencapsulated pyrethrins by interfacial polymerization. The first component forming the microcapsule is a polyisocyanate or an acyl chloride that is mixed with the active ingredient with or without organic solvents. The mixture is emulsified in a continuous aqueous phase to which a polyfunctional amine is then added. The microcapsule wall is formed of polyamides or polyureas.

Also in this patent no indication is given on the residual activity of the formulation for times of at least three months, preferably of at least six months or even nine months from the application.

EP 747,116 describes a process for preparing microcapsules. The microcapsule polymers obtained by interfacial polymerization are polyureas, polyurethanes, polyamides, polycarbonates, polysulphonamides, polyureas being preferred.

Also for this patent the above reported comments for USP 4,497,793 can be repeated.

DE 24,11,373 reports a method for controlling insects with a formulation containing pyrethrins or pyrethroids, preferably with the addition of synergistic agents. Besides the killing effect, this method allows to obtain also a repellent effect. Pyrethrins, pyrethroids and synergistic agents are used admixed or non admixed and are at least partially microencapsulated. The microencapsulated active ingredients can be mixed with microcapsules containing synergistic agents, or are used with non encapsulated synergistic agents. Alternatively, the active ingredients and the synergistic agents are encapsulated together and then used. The microcapsules have sizes lower than 50 µm.

This patent does not report the types of polymers used for preparing the microcapsules. Besides, the period of time subsequent to the treatment, during which the release of the active ingredient is effective to inhibit the insect reappearance, is not mentioned.

GB 1,513,614 describes stable compositions of pyrethroid microcapsules. It is known that some pyrethoids are unstable in the presence of oxygen and of light. In the patent it is stated that the microencapsulation is not very useful to increase their stability as they very easily degrade also inside the microcapsules. The problem of the pyrethroid stability inside the microcapsules is solved by preparing microcapsules having polyurea walls and comprising a UV absorber (photostabilizer). The microcapsules contain a liquid comprising one pyrethroid and one synergistic agent. The microcapsules have sizes from 1 to 100 µm, preferably from 1 to 30 µm. In the examples the microcapsule walls are obtained by reacting polymethylene-polyphenylenisocyanate with a polyamine (tetraethylene pentamine). In the examples the insecticidal efficacy of these compositions has been monitored up to 60 hours from the application.

Also in this patent no indication is given on the residual activity both as knock-down and killing effect of the formulation containing microencapsulated pyrethroids and/or neonicotinoids for times of at least three months, also at least six and nine months from the applications.

Patent application EP 183,999 relates to microcapsules containing pyrethroids and thereof preparation process. The process is carried out by interfacial condensation and the polycondensates are selected from the group comprising polyamides, polhyamides-polyurea, polysulphonamides, polyesters, polycarbonates, polyurethanes and polyureas. The process comprises the steps of:
- preparation of an aqueous dispersion containing the pyrethroid in emulsion together with the first polymerization monomer, under stirring,
- addition to the aqueous phase of the second monomer.
The first or the second monomer comprise at least in part a polyfunctional reactant containing at least two functional groups for crosslinking. The functional groups are selected from amino, hydroxy, isocyanate, -COCl, -SO₂Cl. The microcapsules have a diameter from 3 to 130 µm, preferably from 10 to 45 µm. The data reported in Table 2 of the EP show that the microcapsules are effective for more than 2 days (56 h) from the application.

However also this patent application does not concern microcapsules showing residual activity at three months, also at six or nine months from the application.

Patent application GB 2,187,957 relates to insecticidal/acaricidal compositions of pyrethroids microencapsulated in a microcapsule with a polymeric wall having an average diameter not greater than 80 µm, a wall thickness not greater than 0.3 µm and an average diameter ratio particle/wall thickness not lower than 250. The polymers forming the microcapsule wall are obtained by interfacial polymerization and are for example polyurethanes, polyureas, polyamides, polyamides-polyureas, polyesters, polycarbonates, polysulphonates, polysulphonamides.

The Tables of the examples show that the microcapsules maintain a killing effect during the period of observation comprised between 14 days and 28 days.

Also this patent application does not concern microcapsules showing residual activity even after three months or even at six and nine months from the application.

Patent application EP 322,820 describes microcapsules containing a pyrethroid insecticide, having a 3-phenoxybenzyl group, dissolved in the solvent 2-phenyl-xylyl-ethane. The microcapsule wall is formed of polyurethane and has a diameter not greater than 80 µm, a thickness not greater than 0.3 µm and a value of the ratio between average diameter of the microcapsule/wall thickness of 100-400. The formulation is particularly indicated for the insecticidal activity on cockroaches. Tables 3 and 4 of the examples show that the microcapsules maintain a killing effect during the two months of the observation period.

Also this patent application does not concern microcapsules showing residual activity at three months and also at six and nine months from the application.

EP 902,724 relates to a process for preparing insecticidal compositions in polyurea microcapsules having a relatively quick and complete release of the active ingredient after a short time. The release rate is of the same order as that obtainable from concentrated emulsions.

Patent application US 2009/0130,156 describes formulations of microcapsules allowing to improve the efficacy of the active ingredients having insecticidal, acaricidal, fungicidal or vermicidal activity by a single application, providing at the same time an effective treatment also for those species that have developed a resistance to the treatment with these agents. The active ingredient is released within some hours (1-12 hours). The microcapsule polymers can be for example polyesters, polyamides, polyureas, polycarbamates, polyurethanes or urea/formaldeyde polymers. Also this patent application does not concern microcapsules showing residual activity at three months and also at six and nine months from the application.

Patent application US 2003/0119,675 relates to microcapsule suspensions wherein the microcapsule walls are obtained by reaction of mixtures of toluene diisocyanate and 4,4'-methylenebis(cyclohexylisocyanate) with at least a diamine and/or a polyamine. The preferred amines are the aliphatic and alicyclic ones. The microcapsules contain an active ingredient that can be an insecticide selected from pyrethroids, neonicotinoids, thiazole derivatives, phosphoric acid derivatives, or azolic fungicides, or triazolinone herbicides, benzonitriles or phenyluracils. The microcapsules additionally contain a liquid aliphatic hydrocarbon with boiling point higher than 160°C, an oleo-soluble dispersing agent and optionally one or more liquid pesticides liquid at room temperature. The liquid phase is aqueous and optionally comprises additives and non encapsulated active ingredients. These suspensions show high stability and also after a prolonged storage do not show formation of sediments. Also this patent application does not concern microcapsule formulations showing residual activity at three months and also at six and nine months from the application.

Patent application US 2004/0115,280 relates to microcapsules containing solid substances. In this patent application it is stated that the presence of liquids can pollute the area treated in the application and it reduces the microcapsule stability. The microcapsules are prepared by bringing a suspension of at least one active ingredient into contact with at least one polyisocyanate dispersed in water that reacts with a polyol or polyamine component. The active ingredient can be a fungicide, bactericide, insecticide, acaricide, vermicide, molluscicide, herbicide. The microcapsule sizes are in the range 1-200 µm. This patent application does not concern microcapsule formulations showing residual activity at three months and also at six and nine months from the application.

Patent application US 2004/0120,976 relates to microcapsule compositions containing a pyrethrin with a wall formed of a polymer for example polyurethane, polyurea, polyamide, polyester, polycarbonate. The microcapsules have an average diameter comprised between 5 and 100 µm and a thickness from 0.03 to 1 µm. The pyrethrin can be in solution in an inert organic solvent. Synergistic agents as piperonyl butoxide (PBO) can also be added. The examples of this patent application relate to pyrethrin microcapsules with polyurethane shells. These compositions show a killing effect also after 5 months from the application. This patent application does not concern microcapsules showing residual activity for longer times, at six and even and nine months from the application.

Patent application WO 03/051,116 relates to the disinfesting treatment of domestic animal parasites. In the patent application it is stated that a problem of the formulations for the disinfestations of parasites of domestic animals is that the insecticide can be used at a dose that is toxic for the animal. Although many insecticides having a high efficacy are known, for example Deltamethrin, their use for the disinfestation of domestic animals has been limited, as these insecticides have a very high oral and topic toxicity. The patent application describes formulations containing microcapsules of insecticides that have a low solubility in organic solvents and are solid at room temperature. In this way the microcapsules release a constant but reduced dose of the insecticide that it is not toxic for the animal. The microcapsules containing the active ingredient are prepared by oil in water interfacial polymerization. Preferably the microcapsule walls are of polyurea and have a diameter from 0.1 to 100 µm, preferably from 0.2 to 5 µm. In the examples microcapsules having a diameter of about 1 µm are used. Tests on the insecticidal efficacy for a time of 24 h are reported. In this patent application no indication is given on both killing and knock-down residual activity prolonged in time even at three months and also at six and nine months from the application.

USP 5,229,122 relates to formulations of pesticides in microcapsules wherein a pesticide is microencapsulated and a second pesticide is non encapsulated. The two pesticides can be the same or different. The part of the formulation that is non encapsulated can be in the form of wettable powder, emulsifiable concentrate, microemulsion, powder or any other suitable form. The non encapsulated active ingredient can range from 0.5% to 50% by weight on the total pesticides in the formulation. The formulation can contain known excipients and in particular synergistic agents as piperonyl butoxide. In example 1 the preparation of a microcapsule formulation containing as active permethrin inside and outside the microcapsule is reported. The pesticide is microencapsulated with xylene in a polyurea-polyamide polymeric wall. Outside the microcapsules Permethrin is in admixture with a surfactant in water. The formulation titre of Permethrin is 25%, whose 20% is encapsulated and 5% non encapsulated. In the biological test, by applying the formulation after dilution on cockroaches, it is reported that the time for obtaining the knock-down effect on 50% of the insects (KT₅₀) has been of 6.6 minutes. After one day all the insects were dead.

In this patent no indication is given on a prolonged insecticidal residual activity, also longer than 3 months from the application, even longer than six and nine months.

USP 5,178,872 relates to compositions having insecticidal and/or acaricidal and/or nematocidal activity having rapid efficacy and residual activity. The compositions comprise microcapsules containing an organophosphorate compound having insecticidal and/or acaricidal and/or nematocidal activity and/or a carbamate slightly soluble in water with insecticidal and/or acaricidal activity, in combination with a dispersing agent. Outside the microcapsules there is an insecticidal and/or acaricidal pyrethroid emulsified or suspended in water with a dispersing agent. The dispersing agents used are polymeric compounds of natural origin, such as arabic gum, or they are prepared by synthesis. The preferred polymers forming the capsule wall are polyurethane and polyurea. Both in the preparation of the microcapsules and the external part thereto, as well as the final formulation, compounds such as thickeners, synergistic agents such as piperonyl butoxide and others can be added, if required. Example 3 describes the preparation of a formulation comprising microcapsules containing Fenitrothion and outside Tralomethrin dissolved in Solvesso 100® and dispersed in an aqueous solution containing arabic gum as dispersing agent. The formulation contains 10% by weight of Fenitrothion and 0.025% by weight of Tralomehtrin. Table 5 shows that the formulation diluted and sprayed on termites has a knock-down effect, determined as KT₅₀, of 11 minutes. Table 6 shows that after 24 hours from the application 93% of the insects were dead.

In this patent no indication is given on the residual activity of the formulation for times of at least three months and also of at least six and nine months from the application.

Patent application WO 2007/101,019 relates to a pesticidal formulation in microcapsules comprising a microencapsulated pesticide, preferably Clomazone, a dispersing agent selected from a) a lignin, b) a lignosulphate salt, c) a lignosulphate salt combined with the sodic salt of a substituted naphthalene sulphonate-formaldeyde polymer, d) a salt selected from the group consisting of magnesium sulphate, sodium chloride, sodium nitrate and calcium chloride. The formulation further comprises a non-encapsulated pesticide. The formulation solves the technical problem of preparing stable microcapsule mixtures containing Clomazone with another pesticide outside the microcapsules. In fact when the external active ingredient is oleophilic, it tends to quickly extract Clomazone from the microcapsules.

Also in this patent no indication is given on the residual activity of the formulation at three months and also at six and nine months from the application.

USP 5,049,182 relates to "single-package" formulations in the form of a suspension containing two dispersed phases. The first dispersed phase comprises a microencapsulated a.i. (active ingredient). The second dispersed phase comprises a non microencapsulated a.i. that can be in the form of liquid or solid particles. According to this patent two different a.i. or the same a.i. can be used., obtaining in a same formulation the combination of a composition with an immediate biocide release with another that slowly releases the active. It is possible to combine an a.i. with an activity modifier, such as for example a safener, in order to decrease the amount of one of the two a.i.

Also in this patent no indication is given as to the residual activity for times of at least three months and also of at least six and nine months from the application, and no indication as to a knock-down effect.

WO 2006/111839 relates to the preparation of compositions with high insecticidal activity, wherein insecticide-containing microcapsules are dispersed in an emulsion or microemulsion of a synergist with said microencapsulated insecticide. At the treatment stage, these compositions enable the synergistic product to act immediately, sensitising the insect before insecticide release occurs. The capsule then releases the insecticide with a sufficient time delay after the synergist has achieved its sensitising potential; the effect of the insecticide is thus amplified.

US 2010/285960 discloses microcapsule suspoemulsions comprising: A) a microcapsule comprising: a pyrethroid insecticide and PBO synergist wherein the ratio of PBO to active is from 50:1 to 1:1 and wherein the concentration of active is 2.5 to 55 %, and the capsule wall made of Voronate™ 220 (MDI+PAPI) and diamine (HMDA; and B) external emulsion comprising PBO 20 % to 600 % of the amount of PBO in the microcapsule. It was demonstrated that the addition of PBO outside increase release of active from microcapsule (see Tab. 5).

EP 2 589 290 discloses microcapsules comprising a pyrethroid insecticide and a synergist with wall made of MDI+PAPI without diamine component (HMDA).

The need was therefore felt to have available for professional, domestic, public hygiene applications formulations comprising suspo-emulsions formed by microcapsules containing at least one active ingredient selected from the pyrethroid and neonicotinoid classes and by an emulsion, comprising at least an a.i. of the above indicated classes and a synergistic agent, the formulation showing a prolonged killing effect at three months from the application, and also at six and nine months from the application, and even longer than this, combined with a high knock-down effect within one hour from the contact with the insect and with a high killing effect after 24 hours from the application and showing a long termstability, at least of two years, as determined by the CIPAC MT 46.3 method.

It has been unexpectedly and surprisingly found by the Applicant the solution to the above mentioned technical problem as defined in claims.

An object of the present invention is the use for professional, domestic, public hygiene applications of formulations consisting essentially of suspo-emulsions comprising: component A):
a microcapsule aqueous suspension, the microcapsules comprising at least one active ingredient selected from the pyrethroid and/or neonicotinoid classes, at least one synergistic agent as defined below; and component B): an emulsion comprising at least one active ingredient of the above classes, the same or different to the one in the microcapsules and at least the one synergistic agent, the same or different from the one in the microcapsules, the microcapsule shell consisting essentially of polyurea, obtainable by interfacial polymerization of only diphenylmethylen-4,4'-diisocyanate (MDI), optionally in admixture with polymethylenpolyphenyl isocyanate (PAPI), the formulations having a knockdown effect and a prolonged killing effect, even at three months, even at six and nine months from the application, and wherein: the total amount of the microencapsulated components being not higher than 50% by weight with respect to the weight of component A), wherein the active ingredient ranges from 2 to 50% by weight of the sum of the components contained in the microcapsule, the ratio by weight synergistic agent/active ingredient in the microcapsule ranges from 49:1 to 1:1, the complement to 100% by weight of component A) comprising the polymer of the microcapsule wall, water and additives of the suspension;
and wherein: the amount of active ingredient and of the synergistic agent being not higher than 50% by weight of component B), the ratio by weight synergistic agent/active ingredient in the emulsion being in the range 10:1 - 1:1, the complement to 100% by weight of component B) comprising water and additives,
   the additives of component A) and B) comprising dispersants and antifreeze agents.

In the microcapsules of component A) the ratio by weight synergistic agent/a.i. ranges from 10:1 to 2:1, preferably 8:1 to 2.5:1, still more preferably from 6:1 to 3:1.

In the emulsion component B) the ratio by weight synergistic agent/a.i. preferably ranges from 6:1 to 2:1.

The synergistic agent of the active ingredient is selected from 5-[2-(2-butoxyethoxy)-ethoxymethyl]-6-propyl-1,3-benzodioxole (piperonylbutoxide-PBO), 5-[2-(2-butoxy-ethoxy)-ethoxymethyl]-6-hexyl-1,3-benzodioxole, [1-(2-butyn -1-yloxy)-ethyl]-1,2-dimethoxybenzene (Verbutin), 4-(2-ethyl-hexyl)-4-aza-tricycle [5.2.1.0^{2.6}]dec-8-ene-3,5-di-one (MGK 264), 5-(but-2-inyloxymethyl)-6-propyl-1,3-benzo dioxole, preferably PBO.

The ratio by weight component A/component B) of the suspoemulsion ranges from 9/1 to 1/9, preferably from 4/1 to 1/4, still more preferably from 4/1 to 1/1.

The average diameter of the microcapsules is in the range 1-50 µm, preferably from 2 to 20 µm.

Preferably the microcapsules walls are formed of polyurea, obtainable by interfacial polymerization of diphenyl methylen-4,4'-diisocyanate (MDI), preferably in the presence of polymethylenpolyphenylisocyanate (PAPI).

Polymethylenpolyphenylisocyanate is generally known, besides as PAPI, also as PMPPI or PMPI or PMDI or polymethylenpolyphenylpolyisocyanate or polyymethylenphenyl iso-cyanate [9016-87-9].

Preferably polymethylenpolyphenylisocyanate (PAPI) has a NCO functionality ranging from 2.3 to 3.

The molecular weight of polymethylenpolyphenyliso cyanate is generally in the range 300-400 dalton.

In the preferred compositions of the invention the amount by weight of MDI with respect to PAPI (MDI:PAPI) is comprised between 100:0 and 20:80, preferably between 35:65 and 65:35.

Optionally for obtaining the microcapsules with polyurea walls as further monomer in combination with MDI, in the interfacial polymerization also tolylendiisocyanate (TDI) can be used. Preferably TDI is used in combination with MDI and PAPI. The ratio by weight MDI:TDI ranges from 10:90 to 100:0, preferably from 30:70 to 90:10.

Examples of pyrethroids that can be mentioned are: Allethrin, d-Allethrin, Bifenthrin, Bioallethrin, Bioresmethrin, Cyfluthrin, β-Cyfluthrin, Cyhalothrin, γ-Cyhalothrin..λ-Cyhalothrin, Cyphenothrin, Cypermethrin, α-Cypermethrin, β-Cypermethrin, θ-Cypermethrin, ζ-Cypermethrin, Cyclothrin, Deltamethrin, d-trans Allethrin, Esfenvalerate, Etofenprox, Phenothrin, d-Phenothrin, Fenproprathrin, Fenvalerate, Imiprothrin, Metofluthrin, Permethrin, Prallethrin, Resmethrin, Silafluofen, Taufluvalinate, Tetramethrin, d-Tetramethrin, Transfluthrin, pyrethrum extract and their mixtures.

Preferred pyrethroids are: d-Allethrin, Bifenthrin, Cyfluthrin, β-Cyfluthrin, λ-Cyhalothrin, Cypermethrin, α-Cypermethrin, Deltamethrin, d-trans Allethrin, Etofenprox, Phenotrin, d-Phenothrin, Imiprothrin, Methofluthrin, Permethrin, Prallethrin, Tetramethrin, d-Tetramethrin, Transfluthrin, pyrethrum extract and their mixtures.

More preferred pyrethroids are: d-Phenotrin, Prallethrin, Tetramethrin, d-Tetramethrin, Imiprothrin, d-Allethrin, d-trans Allethrin, Cyfluthrin, λ-Cyhalothrin, Deltamethrin, Permethrin, Transfluthrin, pyrethrum extract and their mixtures.

Still more preferred pyrethroids are the following ones: d-Phenothrin, Prallethrin, Tetramethrin, Imiprothrin, d-Tetramethrin, d-Allethrin, d-trans -Allethrin, λ-Cyhalothrin, Deltamethrin, pyrethrum extract and their mixtures.

Examples of neonicotinoids are Acetamiprid, Clothianidine, Imidacloprid, Thiacloprid, Thiamethoxam, Dinotefuran and AKD1022 ((2E)-1-[(2-Chloro-1,3-thiazol-5-yl)methyl]-3,5-dimethyl-N-nitro-1,3,5-triazinan-2-imine) and their mixtures.

Preferred Neonicotinoids are Acetamiprid, Imidacloprid, Thiamethoxam, Thiachloprid and their mixtures.

Also mixtures of one or more pyrethroids and/or one or more neonicotinoids can be used. Preferably in these mixtures pyrethroids are selected from the following: d-Phenothrin, Prallethrin, Tetramethrin, d-Tetramethrin, Imiprothrin, Permethrin, d-Allethrin, d-trans Allethrin, λ-Cyhalothrin, Deltamethrin, Cyfluthrin, Transfluthrin and neonicotinoids are selected from Acetamiprid, Imidacloprid, Thiamethoxam, Thiacloprid.

Preferably inside the microcapsules one or more pyrethroids and/or one or more neonicotinoids are comprised and outside the microcapsules one or more pyrethroids are preferably present, optionally one or more neonicotinoids.

Components A) and/or B), besides dispersants and antifreeze agents, can contain further additives selected from one or more of the following ones: photostabilizers, thickeners, antifoam, antimould agents (biocides), adhesive agents and organic solvents.

Photostabilizers can be added both in the microcapsules of component A) and in the emulsions component B).

Preferably in the microcapsules of component A) an organic solvent is included.

The amounts of the additives added inside the microcapsule are in substitution of the one or more synergistic agents.

Other further optional additives are contained in the suspension of component A) and in the emulsion component B).

Preferably the emulsion B) comprises also photostabilizers. In another preferred embodiment the emulsion component B) does not comprise organic solvents.

In the suspension of component A) and in the emulsion component B) the amounts of dispersants and antifreeze agents are added in substitution of water.

The amounts of the further optional additives of the suspension of component A) and/or B) are added in substitution of water.

Preferably adhesive agents are present in the suspension of component A).

Preferably, thickeners are present in the suspension of component A) and in emulsion B).

The concentration of the additives as % by weight on the total of each of the components A), B) is as it follows, the amount of each additive in components A) and B) being the same or different:

| | |
|---|---|
| dispersants | 0.5-5%, |
| antifreeze agents | 1-10%, |
| photostabilizers | 0-8%, |
| thickeners | 0-10%, |
| antifoam agents | 0-1%, |
| antimould agents | 0-1%, |
| organic solvents | 0-30% |

As dispersants (surfactants) the following compounds can for example be mentioned: lignin sulphonates, for example sodium lignin sulphonates, for example Reax® 100M, Reax® 88 B, Kraftsperse®25 M and Ultrazine® NA; calcium lignin sulphonates, for example Borrement® CA; block polymers containing ethylenoxide and/or propylenoxide blocks, for example Pluronic®PE 6400, Pluronic® 10400m and Antarox® TSP 461; polycarboxylates, for example sodium carboxylate, for ex. Geropon® TA 72.

As antifreeze compounds the following compounds can for example be mentioned: inorganic salts, for example calcium nitrate, sodium carbonate, calcium chloride, sodium chloride, glycols for example monopropylene glycol, dipropylene glycol, monoethylene glycol, glycerine.

As photostabilizers (photoprotectors) the following compounds can for example be mentioned: benzotriazoles, benzophenones and sterically hindered amines (HALS); benzotriazoles are preferably selected from the following ones: 2-(2'-hydroxy-5-t-octylphenyl) benzotriazole and 2-(2'-hydroxy-3'-t-butyl-5'-methyl phenyl)-5-chloro-benzotriazole (Tinuvin®326);
benzophenones are preferably selected from 2-hydroxy-4-methoxy benzophenone, 2-hydroxy-4-octyloxy benzophenone, 2,2'-dihydroxy-4,4'-dimethoxy benzophenone;
the sterically hindered amines are preferably selected from the following compounds: di(2,2,6,6-tetramethyl-4-piperinidyl) sebacate; di(1,2,2,6,6-pentamethyl-4-piperidinyl) sebacate (Tinuvin®292); alpha-[[6-[[4,6-bis(dibutylamino)-1,3,5 triazin-2-yl] (2,2,6,6-tetramethyl-4-piperidinyl)amino] hexyl] (2,2,6,6-tetramethyl-4-piperidinyl)amino]-omega-[4,6-bis (dibutylamino)-1,3,5-triazin-2-yl]-poly[[6-[butyl (2,2,6,6-tetramethyl-4-piperidinyl)amino]-1,3,5-triazin-2,4-diyl] [2,2,6,6 tetra methyl-4-piperidinyl)-imino]-1,6-hexandiyl [2,2,6,6-tetra methyl-4-piperidinyl)imino]; the dimethylsuccinate polymer with 4-hydroxy-2,2,6,6-tetramethyl-1-piperidin-ethanol; the polymer of N,N' di(2,2,6,6-tetramethyl-4-piperinidyl)-1,6-hexan-diamine with 2,4,6 trichloro-1,3,5-triazine and 1,1,3,3-tetramethyl butylamine; polymethyl propyl-3-oxy(4((2,2,6,6-tetramethyl) piperidinyl siloxane; 1,3,5-triazine-2,4,6,-triamine, N,N' [1,2-ethandiyl di-[[[4,6-bis[butyl(1,2,2,6,6-pentamethyl-4-piperidinyl)-amino]-1,3,5-triazine-2-yl]imino]-3,1-propandiyl]]-di [N',N"-di butyl-N',N"-bis(1,2,2,6,6-penta-methyl-4-piperid-inyl)]-or the following mixture: mixture of the dimethylsuccinate polymer with 4-hydroxy-2,2,6,6-tetramethyl-1-piperidin ethanol and the polymer of N,N' di(2,2,6,6-tetramethyl-4-piperinidyl)-1,6-hexanediamine with 2,4,6 trichloro-1,3,5-triazine and 1,1,3,3-tetramethyl butylamine.

The photostabilizers are preferably selected from benzotriazoles and sterically hindered amines; Tinuvin® 292 [41556-26-7] and Tinuvin® 326 [3896-11-5] and their mixtures are still more preferred.

As thickeners the following compounds can for example be mentioned: xanthan rubber (Rhodopol®).

As antifoam agents the following compounds can for example be mentioned: silicone compounds, for example Defomex®® 1510.

As antimould agents the following compounds can for example be mentioned: the substituted triazines, for example Amebact®® C; benzoisothiazolinones, for example Proxel®® GXL.
As adhesive agents (adhesivants) the following compounds can for example be mentioned: polyvinyl pyrrolidone, for example PVP®K30, PVP®K15, PVP®K90; vinylpyrrolidone/vinylacetate copolymers, for example PVP VA; sugars for example glucose, saccharose.

The organic solvents used in the suspo-emulsion of the present invention are preferably those safe for the operator and for the environment. The organic solvents suitable for the present invention show the following properties:
miscibility, preferably complete miscibility, with the synergistic agent,
effective in solubilizing the active ingredient at room temperature (20°C) at least at a concentration of 1% by weight, preferably 5%, more preferably 10%, still more preferably 20% by weight,
immiscibility with water,
chemical inertia towards the polymer forming the microcapsules.

Examples of organic solvents are the following:
- C₉-C₂₀ alkylbenzenes, preferably C₁₀-C₁₆, or mixtures thereof, wherein the alkyl can be linear or branched; for example Solvesso® 150, Solvesso® 200, Solvesso® 150 ND, Solvesso® 200 ND, preferably the C₉-C₂₀ alkylbenzenes free from naphthalene residues for example Solvesso® 150 ND, Solvesso® 200 ND;
- C₁-C₄ alkyl esters of aliphatic C₃-C₁₄ bicarboxylic acids or mixtures thereof, such as for example dimethyl glutarate, dimethyl succinate, dimethyl adipate, dimethyl sebacate, diisopropyl myristate or mixtures thereof, preferably DBE (mixture containing 55-65% weight/weight of dimethyl glutarate, 15-25% of dimethyl succinate and 10-25% of dimethyl adipate);
- C₃-C₁₀ alkyl esters of aliphatic C₃-C₁₀ carboxylic acids and of aliphatic C₃-C₁₀ hydroxyacids, such as for example Purasolv® EHL (ethylhexyl lactate), or mixtures thereof;
- methyl esters of C₁₂-C₂₂ saturated or unsaturated fatty acids or mixtures thereof, preferably oleic acid and linoleic acid or mixtures thereof, for example biodiesel;
- C₇-C₉ alkyl esters of acetic acid, for example heptylacetate (Exxate® 700, Exxate® 900) or mixtures thereof.

The formulations of the present invention have been shown stable at least for two years according to the accelerated stability tests CIPAC MT 46.3 (see the examples).

As said, the formulations of the present invention are particularly suitable for professional, domestic, public hygiene applications to control carriers of pathogenic agents, for example malaria and dengue, for home applications, for environment disinfestation, for example stables, sheds of domestic animals and residential and industrial areas.

The formulations of the present invention consist essentially of suspo-emulsions defined above. The emulsion can be in the form of macroemulsion or microemulsion. The skilled in the field can prepare emulsions, macroemulsions and microemulsions by using the known methods of the prior art.

The formulations of the invention are particularly suitable against arthropods blattodea, for example cockroaches, dipterons for example fleas, hymenopters for example mosquitos, isopters for example ants, siphonopters, for example, fleas, acari for example spiders, beetles for example cockchafers, isopters for examples termites, dermopterans, for example earwigs and rynchotes for example bugs.

The knock-down and killing effect prolonged in time of the formulations has been determined by using non-resistant insects bred in laboratory such as fly, mosquito and cockroach, by means of the following test:
the insecticidal formulations are prepared by dilution with water at the desired application dose of the suspo-emulsions, applied on porous or on non porous surfaces, then maintaining the insects into contact with the treated surface for 1 hour, repeating the test at different times, after 1, 2, 3, 6 and 9 months from the application with three repetitions each time and for each insect, and evaluating the knock-down percentage of insects (on the total tested) at the end of the exposure (knock-down effect); the insects are then transferred in an environment free from the insecticide wherein they are fed, the mortality % evaluated after 24 hours after the exposure (killing effect), running an untreated control group for establishing the insect natural mortality.

As said, the formulations of the present invention have both a knock-down and killing effect that manifests immediately after the application and that lasts in time even up to nine months, and even longer than this. The formulations of the present invention are stable for at least two years according to the CIPAC MT 46.3 method.

In particular the formulations of the present invention show a high knockdown effect within one hour from the contact of the insect with the treated surface and also a high residual insecticidal activity at 3 months, even at six and nine months from the application of the formulations on the surface. The formulations of the present invention can be used for treating surfaces of tiles, concrete walls, wood, etc.).

Examples of porous surfaces are unglazed tiles, porous cements, mud, plywood; examples of non porous surfaces are glazed tiles, painted cement, for example with acrylic paints.

A further object of the present invention are formulations comprising the suspo-emulsions as defined above.

A further object of the invention is a process for preparing the suspo-emulsions comprising a suspension of microcapsules component A) and an emulsion component B), comprising the following steps:
(I) preparation of a concentrated microcapsule suspension, component A) by the following steps:
   a) preparation of an aqueous phase containing at least one dispersant;
   b) preparation of an oily phase containing at least one active ingredient selected from the pyrethroid and/or neonicotinoid classes, at least one synergistic agent as defined above and methylenphenylen-4,4'-diisocyanate (MDI), preferably in the presence of polymethylen-polyphenylisocyanate (PAPI), optionally in the presence of TDI, as monomers to form the polyurea wall of the microcapsules;
   c) addition of the oily phase b) to the aqueous phase a) under stirring, obtaining a suspension of microcapsules with polyurea walls,
   c') addition of an aqueous phase comprising at least an antifreeze agent, obtaining component A),
(II) preparation of the emulsion component B), comprising at least one active ingredient selected from the pyrethroid and/or neonicotinoid classes and at least one synergistic agent as defined above by the following steps:
   d) under stirring, solution of the active ingredient in the synergistic agent and addition of a dispersant, obtaining a liquid phase premix 1,
   e) under stirring, mixing water with at least one antifreeze agent until complete dispersion with formation of the liquid phase premix 2,
   f) under stirring, addition of premix 1 to premix 2 obtaining the emulsion component B),
   to the microcapsule suspension A) the emulsion component B) is added in the above indicated ratios by weight, obtaining the suspo-emulsion C).

To the suspo-emulsion C) other additives selected from the group of the further optional additives indicated above can optionally be added.

Preferably in step (b) organic solvents are added.

Preferably photoprotectors are added in the emulsion component B).

Optionally adhesive agents are added in the aqueous suspension of component A).

Optionally thickeners are added both in the aqueous suspension of component A) and in the emulsion component B) .

In step c) the addition of the oily phase b) to the aqueous phase a) is preferably carried out by operating under stirring such as to generate in the reactor a turbulent motion. In this way a dispersion/emulsion is obtained in a very short time, of the order from 0 to 20 minutes, preferably from 1 to 15 minutes. Preferably in step b) the monomer diphenylmethylen-4,4' diisocyanate (MDI) is used in combination with polymethylenpolyphenylen polyisocyanate (PAPI), optionally in the presence of TDI. Alternatively, in step b) MDI in the presence of TDI can be used. The weight ratio synergistic agent/active ingredient, the amount by weight of MDI with respect to PAPI and the ratio by weight of MDI with respect to TDI are as defined above.

Preferably the aqueous microcapsule suspension obtained in c) is left for a time from 2 to 8 hours at a temperature from 30° to 80°C (maturation step). The aqueous microcapsule suspension is then cooled to about room temperature (15-25°C) before performing step c').

In the aqueous phase a) an amount from 0.1 to 30% by weight of an electrolyte on the total water amount can be added as optional component. The electrolyte is preferably an inorganic salt, preferably with a high solubility (i.e. freely soluble) in water. Generally the salts that can be used are those of the metal cations of the first and second group of the Periodic Table. Those preferred are selected from the following: NaCl, LiCl, KCl, MgCl₂, CaCl₂, LiNO₃, NaNO₃, KNO₃, MgNO₃, CaNO₃, Li₂SO₄, Na₂SO₄, K₂SO₄, MgSO₄, Na₂KPO₄, K₂HPO₄, NaH₂PO₄, KH₂PO₄. Also NH₄Cl₁ (NH₄)₂SO₄, (NH₄) HPO₄, (NH₄)H₂PO₄ can be used.

The following examples are given for illustrative purposes and do not limit the scope of the present invention.

### EXAMPLES

### Physico-chemical characterization

The formulations have been characterized as reported in "Manual on the Development and Use of FAO and WHO Specifications for Pesticides", Chapter 7, as it follows:
- pH range - CIPAC MT 75.3
- particle size distribution - CIPAC MT 187
- pourability - CIPAC MT 148.1
- viscosity- CIPAC MT 192
- dispersion stability - CIPAC MT 180
- wet sieve test- CIPAC MT 185
- persistent foam - CIPAC MT 47.2

### Accelerated stability test of the fomulations

The stability of the suspo-emulsions has been evaluated according to the CIPAC MT 46.3 method, by a test carried out by heating the sample for 14 days at 54°C, which simulates an ageing corresponding to a time of 2 years at room temperature.
Before and after the test of accelerated stability on the suspo-emulsion the following analytical determinations are carried out:
- titre of the active ingredients
- release of the microencapsulated active ingredients
- pH range - CIPAC MT 75.3
- pourability - CIPAC MT 148.1
- stability of the dispersion - CIPAC MT 180
- determination of the residue (wet sieve test) - CIPAC MT 185.

### Cold stability test of the formulations

The test is carried out according to the CIPAC MT 39.3 method for the stability determination of the suspo-emulsion at low temperatures. In the test the formulation is maintained at 0°C for 1 week. The analytical determinations carried out on the formulation for the accelerated stability test according to CIPAC MT 463 are repeated also in this test.

### Granulometry test of the microcapsules

The test is carried out by using a laser ray granulometer (Malvern Mastersizer). For the analysis 30-50 mg of the tested sample are weighed. After having drawn the granulometric distribution curve, the value in abscissae that corresponds to the maximum peak height is taken as the average granulometry (average diameter of the microcapsules).

### Laboratory Test for determining the prolonged insecticidal efficacy in time of the formulations on mosquito Culex quinquefasciatus (Diptera, Culicidae), domestic Musca domestica (Diptera, Muscidae) and Germanic Blattella (Blattodea, Blattellidae)

The test has been carried out at room temperature, under controlled conditions by using insects coming from laboratory breeding, as it follows:
- mixed sex adults of 3-4 days for flies, 20 insects/replication/ test point,
- mixed sex adults of 3-4 days for mosquitos, 20 insects/replication/ test point,
- male sex adults of 3-4 days for cockroaches, 5 insects/replication/test point.

The tests were carried out by placing the insects into housings constituted by glass rings having diameter 9.5 cm, height 5.5 cm for cockroaches, or by aluminum rings having 1 mm mesh, diameter 10.5 cm and height 2 cm for flying insects. The rings were positioned on 15X15 cm tiles, both on the glazed and unglazed side, previously treated with the insecticidal formulation at the requested dose.

The formulations for the application were prepared from the microcapsule suspo-emulsions/emulsions of microcapsules suspensions described in the examples reported hereinafter, by dilution with water and application on tiles within one hour from their preparation. Said formulations were applied on the tiles by the aid of devices well known to the skilled man in the field, previously calibrated in order to apply a volume of 50 ml/m² of said formulations. The so treated tiles were then transferred under a fume hood until complete water evaporation; then the first test point at 0 time was carried out, by exposing the insects as described above. The insects were kept in contact with the treated surface for 1 h. At the end the knock-down percentage was evaluated. The insects were then removed and transferred into an insecticide-free environment. The insects were then fed with a water and a sugar solution. After 24 hours under these conditions the dead insects were counted (killing effect). After each test point the tiles were stored in an air-conditioned room under the following conditions:
- temperature 25°C (±2°C)
- relative humidity 60% (±10%)
- photo-period light/dark: 12 hours of light and 12 hours of dark.

The prolonged efficacy of the residual killing effect has been evaluated after one month, three months, six months and 9 months from the tile treatment and subsequent exposure of the tiles in the above reported conditions. For each time point, formulation and target insect, three repetitions were carried out. The tiles used have been the same from the beginning to the end of the test. During the experimentation an untreated control was run for ascertaining the insect natural mortality.

Both the concentrated suspensions of microcapsules and the emulsions of the relevant suspo-emulsions, prepared as described in the examples hereinafter reported, have been evaluated.

The results are reported in Table 4.

### EXAMPLE 1

### Preparation of a suspo-emulsion containing Deltamethrin and PBO in the microcapsules and Tetramethrin and PBO in the emulsion

### A) Preparation of the suspension of microcapsules containing Deltamethrin and piperonyl butoxide (component A))

In an 1 litre reactor 31 g of Deltamethrin (titre 99%), 158 g of piperonyl butoxide (titre 95%), 12.6 g of Tinuvin® 326 and 188 g of Biodiesel are mixed. The mixture is heated to 50°C until obtaining a solution. To this solution 31 g of Voranate™ M 220, containing 60% by weight PAPI and 40% by weight MDI, are added. The mixture is left under stirring until complete solubilization.

Separately, in a 2 litre reactor, an aqueous solution is prepared by mixing 475 g of water, 11 g of the dispersant (surfactant) Reax™ 100 M. The mixture is left under stirring until complete dissolution and it is heated to 45°C.

The organic solution previously prepared is added to the aqueous solution of Reax™ 100 M under stirring at 10,000 rpm for 3 min.

The obtained microcapsule suspension is then transferred into a 2 litre reactor for the maturation step, carried out under stirring, and maintaining a temperature of 50°C for 4 hours. The microcapsule suspension is then cooled at room temperature and the product is discharged in a 2 litre reactor, wherein the following components are added in the indicated amounts:

| Component | Typology | grams |
|---|---|---|
| Kobate™ C | Biocide (antimould) | 2 |
| Rhodopol™ 23 Pregel 2.7% | Thickener | 40 |
| Defomex™ 151 | Antifoam | 2 |
| Propylene glycol | Antifreeze | 50 |

When the addition is over, the suspension is left under stirring until obtaining an homogeneous suspension.

The composition of the microcapsule suspension is reported in Table 1.

### The average granulometry of the microcapsules is of 3.1 µm. B) Preparation of the aqueous emulsion containing Tetramethrin and PBO (Component B)).

In a 2 litre reactor 316 g PBO (titre 95%) and 63.2 g of Tetramethrin (titre 95%) are loaded, the mixture maintained under stirring until complete dissolution.

40 g of Antarox TSP 461 (dispersant) previously heated until a complete dissolution, are added thus obtaining premix 1.

In another 2 litre reactor 50 g of propylene glycol (antifreeze Agent), 0.5 g of Defomex™ 1510 (antifoam agent), 40 g of Rhodopol™ 23 (thickener) at 2.7% and 489 g of water are loaded under stirring until a complete dispersion, obtaining premix 2.

Premix 1 is added to premix 2 stirring for 1 minute at room temperature. To the mixture 0.5 g of Defomex™ 1510 and 1 g of Proxel™gxl are then added under stirring, obtaining emulsion (B) having the composition reported in Table 2.

### C) Preparation of the suspo-emulsion

To 800 g of a concentrated microcapsule suspension prepared as described above in A) (component A) 200 g of the emulsion prepared as described in B) (component B)) are added under stirring, obtaining the suspo-emulsion C).

The composition of the suspo-emulsion, as regards the amounts of active ingredients and PBO both in the microcapsules and in the external aqueous phase, is reported in Table 3.

### EXAMPLE 2

### Preparation of a suspo-emulsion containing Tetramethrin, d-Phenothrin and PBO in the microcapsules and Tetramethrin, d-Phenothrin and PBO in the emulsion

### A) Preparation of the suspension of microcapsules containing Tetramethrin, d-Phenothrin and PBO (component A))

In an 1 litre reactor 31.6 g of Tetramethrin (titre 95%), 158 g of piperonyl butoxide (titre 95%) and 15.6 g of d-Phenothrin (titre 96%) and 12.6 g of Tinuvin® 326 are mixed. Heating to a temperature of 50°C is applied until obtaining a solution. To the so prepared solution 8.7 g of Voranate™ M 220 and 8.7 g of TDI (containing 80% by weight of 2,4 substituted isomer and 20% by weight of 2,6 substituted isomer) are added. It is left under stirring until complete solubilization. Separately, in a 2 litre reactor, an aqueous solution is prepared by mixing 460 g of water and 11 g of Reax™ 100 M, by stirring until complete dissolution and it is heated to 45°C.

The organic solution previously prepared is added under stirring to the aqueous solution of Reax™ 100 M at 10,000 rpm for 3 min.

The maturation step of the microcapsules is carried out as described in example 1. The microcapsule suspension is then cooled at room temperature and the product is discharged in a 2 litre reactor, wherein the following components are added in the indicated amounts:

| Component | Typology | grams |
|---|---|---|
| Kobate™ C | Biocide (antimould) | 2 |
| Rhodopol™ 23 Pregel 2,7% | Thickener | 40 |
| Defomex™ 1510 | Antifoam | 2 |
| Propylene glycol | Antifreeze | 50 |
| Water | | 200 |

When the addition is over, the suspension is left under stirring until obtaining an homogeneous suspension.

The composition of the microcapsule suspension is reported in Table 1.

The average granulometry of the microcapsules, determined with the above reported test, is of 3.2 µm.

### B) Preparation of the aqueous emulsion containing Tetramethrin, d-Phenothrin and PBO (Component B))

In a 2 litre reactor 316 g PBO at 95%, 63.2 g of Tetramethrin at 95% and 31.6 g of d-Phenothrin are loaded and the mixture is maintained under stirring until complete dissolution.

40 g of Antarox TSP 461, previously heated, are added to this mixture until a complete dissolution (premix 1).

In another 2 litre reactor 50 g of propylene glycol, 0.5 g of Defomex™ 1510, 40 g of Rhodopol™ 23 at 2.7% w/w in water and 457 g of water are loaded, maintaining the mixture under stirring until a complete dispersion (premix 2).

Premix 1 is added to premix 2 under stirring for 1 minute at room temperature.

To the mixture 0.5 g of Defomex™ 1510 and 1 g of Proxel-gxl are then added under stirring, obtaining the emulsion (B) having the composition reported in Table 2.

### C) Preparation of the suspo-emulsion

To 800 g of concentrated microcapsule suspension prepared as described in A) (component A) 200 g of the emulsion prepared as described in B) (component B)) are added under stirring, obtaining the suspo-emulsion C). The composition of the suspo-emulsion, as regards the amounts of active ingredients and PBO both in the microcapsules and in the aqueous phase, is reported in Table 3.

### EXAMPLE 3

### Preparation of a suspo-emulsion containing Lambda Cyhalothrin and PBO in the microcapsules and Tetramethrin and PBO in the emulsion

### A) Preparation of the suspension of microcapsules containing Lamba Cyhalothrin and PBO (component A))

In an 1 litre reactor 31 g of Lamba Cyhalothrin (titre 97%), 95 g of piperonyl butoxide (titre 95%), 64 g of Solvesso® 200 ND and 7.6 g of Tinuvin™ 326 are mixed. heating to 50°C is applied until obtaining a solution. To this solution 12 g of Voranate™ M 220 and 4 g of TDI (containing 80% by weight of 2,4 substituted isomer and 20% by weight of 2,6 substituted isomer (20% by weight) are added and it is left under stirring until complete solubilization. Separately, in a 2 litre reactor an aqueous solution is prepared by mixing 500 g of water and 11 g of Reax™ 100 M; it is left then under stirring until complete dissolution and it is heated to 45°C.

The previously prepared organic solution is added to the aqueous solution of Reax™ 100 M under stirring at 7600 rpm for 1 min.

The maturation step is carried out as described in example 1. The obtained microcapsule suspension is then cooled at room temperature and the product is discharged in a 2 litre reactor wherein the following components are added, in the indicated amounts:

| Component | Typology | grams |
|---|---|---|
| Kobate™ C | Biocide (antimould) | 1 |
| Rhodopol™ 23 Pregel 2,7% | Thickener | 70 |
| Defomex™ 1510 | Antifoam | 2 |
| Propylene glycol | Antifreeze | 5 |
| Water | | 197 |

When the addition is over, the suspension is left under stirring until obtaining an homogeneous suspension.

The composition of the microcapsule suspension is reported in Table 1.

The average granulometry of the microcapsules, determined with the above reported test, is of 8.9 µm.

### B) Preparation of the aqueous emulsion containing Tetramethrin and PBO (Component B))

The emulsion is prepared as described in Example 1, using the same amounts of active ingredients and additives therein reported.

### C) Preparation of the suspo-emulsion

To 800 g of concentrated suspension of microcapsules prepared as described in A) (component A) 200 g of the emulsion prepared as described in B) (component B)) are added under stirring, obtaining the suspo-emulsion C).

The composition of the suspo-emulsion, as regards the amounts of active ingredients and PBO in the microcapsules and in the liquid phase of the suspo-emulsion, is reported in Table 3.

The results of the tests on insects performed with the suspo-emulsions 1C and 3C (and the corresponding components A) and B)) are reported in Table 4, of suspo-emulsion 2C (and the corresponding components A) and B)) In Table 5.

### EXAMPLE 4

### Preparation of a suspo-emulsion containing Imidacloprid and PBO in the microcapsules and Tetramethrin and PBO in the emulsion

### A) Preparation of the suspension of microcapsules containing Imidacloprid and piperonyl butoxide (component A))

In an 1 litre reactor 26 g of Imidacloprid (titre 96%), 92.1 g of piperonyl butoxide (titre 95%), 310 g of Purasolv®EHP (ethylhexyl lactate) are mixed. The mixture is heated to 50°C until obtaining a solution. To this solution 43.8 g of Voranate™ M 220 are added. The mixture is left under stirring until complete solubilization.

Separately, in a 2 litre reactor, an aqueous solution is prepared by mixing 330 g of water, 11 g of the surfactant Reax™ 100 M. The mixture is left under stirring until complete dissolution and it is heated to 45°C.

The organic solution previously prepared is added to the aqueous solution of Reax™ 100 M under stirring at 7,600 rpm for 1 min by a Turrax mixer.

The microcapsule maturation step is carried out as described in example 1. The microcapsule suspension is then cooled at room temperature and the product is discharged in a 2 litre reactor, wherein the following components are added in the indicated amounts:

| Component | Typology | grams |
|---|---|---|
| Kobate™ C | Biocide (antimould) | 1 |
| Rhodopol™ 23 Pregel 2.7% | Thickener | 40 |
| Defomex™ 151 | Antifoam | 2 |
| Propylene glicol | Antifreeze | 50 |
| water | | 94.10 |

When the addition is over, the suspension is left under stirring until obtaining an homogeneous suspension.

The composition of the microcapsule suspension is reported in Table 1.

The average granulometry of the microcapsules is of 8.6 µm.

### B) Preparation of the aqueous emulsion containing Tetramethrin and PBO (Component B)).

### Preparation of Premix 1

In a 2 litre reactor 316 g PBO (titre 95%) and 63 g of Tetramethrin (titre 95%) are loaded, the mixture maintained under stirring until complete dissolution. 12 g of Tinuvin®326, 40 g of Antarox TSP 461 previously heated until a complete dissolution, are added.

### Preparation of Premix 2

In another 2 litre reactor 50 g of propylene glycol, 0.5 g of Defomex™ 1510, 40 g of Rhodopol™ 23 at 2.7% and 477 g of water are loaded under stirring until a complete dispersion.

Premix 1 is added to premix 2 stirring for 1 minute at room temperature. To the mixture 0.5 g of Defomex™ 1510 and 1 g of Proxel™gxl are then added under agitation obtaining emulsion (B) having the composition reported in Table 2.

### C) Preparation of the suspo-emulsion

To 700 g of a concentrated microcapsule suspension prepared as described above in A) (component A) 300 g of the emulsion prepared as described in B) (component B)) are added under stirring, obtaining the suspo-emulsion C).

The composition of the suspo-emulsion, as regards the amounts of active ingredients and PBO both in the microcapsules and in the external aqueous phase, is reported in Table 3.

### EXAMPLE 5

### Preparation of a suspo-emulsion containing Imidacloprid , Deltamethrin and PBO in the microcapsules and Tetramethrin and PBO in the emulsion

### A) Preparation of the suspension of microcapsules containing Imidacloprid, Deltamethrin and piperonyl butoxide (component A))

In an 1 litre reactor 26 g of Imidacloprid (titre 96%), 12.6 g of Deltamethrin, 92.1 g of piperonyl butoxide (titre 95%), 310 g of Purasolv®EHP are mixed. The mixture is heated to 50°C until obtaining a solution. To this solution 36.5 g of Voranate™ M 220 are added. The mixture is left under stirring until complete solubilization.

Separately, in a 2 litre reactor, an aqueous solution is prepared by mixing 313.3 g of water, 11 g of the surfactant Reax™ 100 M. The mixture is left under stirring until complete dissolution and it is heated to 45°C.

The organic solution and the aqueous solution of Reax™ 100 M are admixed as described in example 4.

The microcapsule maturation step is carried out as described in Example 1. The microcapsule suspension is then cooled at room temperature and the product is discharged in a 2 litre reactor, wherein the following components are added in the indicated amounts:

| Component | Typology | grams |
|---|---|---|
| Kobate™ C | Biocide (antimould) | 1 |
| Rhodopol™ 23 Pregel 2.7% | Thickener | 30 |
| Defomex™ 151 | Antifoam | 2 |
| Propylene glicol | Antifreeze | 50 |
| water | | 115.5 |

When the addition is over, the suspension is left under stirring until obtaining an homogeneous suspension.

The composition of the microcapsule suspension is reported in Table 1.

The average granulometry of the microcapsules is of 8.8 µm.

### B) Preparation of the aqueous emulsion containing

Emulsion B) is prepared as described in example 4.

The composition is reported in Table 2.

### C) Preparation of the suspo-emulsion

To 700 g of a concentrated microcapsule suspension prepared as described above in A) (component A) 300 g of the emulsion prepared as described in B) (component B)) are added under stirring, obtaining the suspo-emulsion C).

The composition of the suspo-emulsion, as regards the amounts of active ingredients and PBO both in the microcapsules and in the external aqueous phase, is reported in Table 3.

**TABLE 1**

| Compositions of component A) of microcapsules (The amounts in the Table are % by weight) | | | | | |
|---|---|---|---|---|---|
| | Example | | | | |
| | 1 | 2 | 3 | 4 | 5 |
| Deltamethrin 99% | 3.1 | - | - | - | 1.26 |
| Tetramethrin 95% | - | 3.16 | - | - | - |
| d-Phenothrin 96% | - | 1.56 | - | - | - |
| Lambda cyhalothrin 99% | - | - | 3.1 | - | - |
| Imidacloprid | - | - | - | 2.6 | 2.6 |
| Piperonyl butoxide 95% | 15.8 | 15.8 | 9.5 | 9.21 | 9.21 |
| Biodiesel | 18.8 | - | - | - | - |
| Solvesso® 200 ND | - | - | 6.4 | - | - |
| Purasolv®EHL | - | - | - | 31.0 | 31.0 |
| Tinuvin 326 | 1.26 | 1.26 | 0.76 | - | - |
| Voranate™ M 220 | 3.1 | 0.87 | 1.2 | 4.38 | 3.65 |
| TDI | - | 0.87 | 0.4 | - | - |
| Reax™ 100 M | 1.10 | 1.10 | 1.10 | 1.1 | 1.1 |
| Propylene glycol | 5.0 | 5.0 | 0.5 | 5.0 | 5.0 |
| Defomex™ 1510 | 0.2 | 0.2 | 0.2 | 0.2 | 0.2 |
| Kobate™ C | 0.2 | 0.2 | 0.1 | 0.1 | 0.1 |
| Rhodopol™ 23 pregel 2,7% | 4.0 | 4.0 | 7.0 | 4.0 | 3.0 |
| water | 47.5 | 66 | 69.7 | 42.41 | 42.88 |

**TABLE 2**

| Compositions of component B) (the amounts in the Table are % by weight) | | | | | |
|---|---|---|---|---|---|
| | Example | | | | |
| | 1 | 2 | 3 | 4 | 5 |
| Tetramethrin 95% | 6.3 | 6.3 | 6.3 | 6.3 | 6.3 |
| d-Phenothrin 96% | - | 3.2 | - | - | - |
| Piperonyl Butoxide 95% | 31.6 | 31.6 | 31.6 | 31.6 | 31.6 |
| Tinuvin® 326 | - | - | - | 1.2 | 1.2 |
| Antarox™ TSP 461 | 4.0 | 4.0 | 4.0 | 4.0 | 4.0 |
| Propylene glicol | 5.0 | 5.0 | 5.0 | 5.0 | 5.0 |
| Defomex™ 1510 | 0.1 | 0.1 | 0.1 | 0.1 | 0.1 |
| Rhodopol™ 23 pregel 2,7% | 4.0 | 4.0 | 4.0 | 4.0 | 4.0 |
| Proxel™ gxl | 0.1 | 0.1 | 0.1 | 0.1 | 0.1 |
| Water | 48.9 | 45.7 | 48.9 | 47.7 | 47.7 |

**TABLE 3**

| Amounts expressed in % by weight of active ingredients and of piperonyl butoxide inside the microcapsules and in the liquid phase of the suspo-emulsion. | | | | | |
|---|---|---|---|---|---|
| | Example | | | | |
| | 1 | 2 | 3 | 4 | 5 |
| Microcapsules | | | | | |
| Deltamethrin 99% | 2.48 | - | - | - | 0.88 |
| Lambda cyhalothrin 99% | - | - | 2.5 | - | - |
| Tetramethrin 95% | - | 2.53 | - | - | - |
| d-Phenothrin 96% | - | 1.25 | - | - | - |
| Imidacloprid | - | - | - | 1.82 | 1.82 |
| Piperonyl Butoxide 95% | 12.64 | 12.64 | 7.6 | 6.45 | 6.45 |

| Liquid phase of the suspo-emulsion | | | | | |
|---|---|---|---|---|---|
| Tetramethrin 95% | 1.26 | 1.26 | 1.26 | 1.9 | 1.9 |
| d-Phenothrin 96 % | - | 0.63 | - | - | - |
| Piperonyl Butoxide 95% | 6.32 | 6.32 | 6.32 | 9.48 | 9.48 |

### EXAMPLE 6

### Evaluation of the knock-down and killing effect of the suspensions of microcapsules (component A)), emulsions (component B)) and suspo-emulsions C) of Ex. 1 and 3

For determining the knock-down and killing effect prolonged in time, the suspo-emulsions C) prepared in examples 1 and 3 have been tested against mosquitos (*Culex quinquefasciatus*)*.*

The microencapsulated and non microencapsulated active ingredients in the two suspo-emulsions 1 C) and 3 C) have been used at the following application doses:

| Ex. | | | | |
|---|---|---|---|---|
| | a.i. microcapsules | Application Dose (mg/m²) | a.i. non microencapsulated | Application Dose (mg/m²) |
| 1 C) | Deltamethrin | 16 | Tetramethrin | 10 |
| 3 C) | Lambda Cyhalothrin | 16 | Tetramethrin | 10 |

Also the following formulations have been assayed:
- The microcapsule suspensions 1 A) and 3 A) (component A)) at the following application doses:

| Example | Active ingredient | Application Dose (mg/m²) |
|---|---|---|
| 1 A) | Deltamethrin | 20 |
| 3 A) | lambda cyhalothrin | 20 |

- The emulsions 1 B) and 3 B) (component B)), containing Tetramethrin, in an amount corresponding to an application dose of Tetramethrin of 50 mg/m².

Table 4 reports the results obtained, respectively. at t=0 and after 7 days, 1 month, 3 months, 6 months and 9 months from the beginning of the treatment on glazed tiles.

**TABLE 4**

| Examples | Knock-down (Kd) and mortality values (m) expressed in % of insects treated on glazed tile. t=time | | | | | | | | | | | |
|---|---|---|---|---|---|---|---|---|---|---|---|---|
| | t=0 | | t 7 days | | t 1 month | | t 3 months | | t 6 months | | t 9 months | |
| | 1h Kd | 24h m | 1h Kd | 24h m | 1h Kd | 24h m | 1h Kd | 24h m | 1h Kd | 24h m | 1h Kd | 24h m |
| Ex. 1 A) | 80 | 100 | 80 | 100 | 80 | 100 | 70 | 90 | 65 | 90 | 50 | 85 |
| Ex. 1 B) | 100 | 100 | 40 | 60 | 30 | 30 | 0 | 0 | 0 | 0 | 0 | 0 |
| Ex. 1 C) | 100 | 100 | 100 | 100 | 70 | 100 | 60 | 80 | 45 | 70 | 45 | 60 |
| Ex. 3 A) | 80 | 100 | 80 | 100 | 70 | 100 | 60 | 100 | 60 | 90 | 60 | 90 |
| Ex. 3 B) | 100 | 100 | 40 | 60 | 30 | 30 | 0 | 0 | 0 | 0 | 0 | 0 |
| Ex. 3 C) | 100 | 100 | 100 | 100 | 70 | 100 | 50 | 80 | 50 | 70 | 50 | 70 |

### EXAMPLE 7

### Evaluation of the knock-down and killing effect of the suspension of -microcapsules A) (component A)), emulsion B) (component B)) and suspo-emulsion C) of ex. 2

For determining the knock-down and killing efficacy prolonged in time the formulations prepared in example 2 have been tested against flies (*Musca domestica*)*.*

The suspo-emulsion 2 C) has been used.

The microencapsulated and non microencapsulated active ingredients in the suspo-emulsion 2 C) have been used at the following application doses:

| a.i. microcapsules | Application Dose (mg/m²) | a.i. non microencapsulated | Application Dose (mg/m²) |
|---|---|---|---|
| Tetramethrin | 40 | Tetramethrin | 10 |
| d-Phenothrin | 20 | d-Phenothrin | 5 |

Also the following formulations have been tested:
- the microcapsule suspension 2 A) (component A)), in an amount corresponding to an application dose of 50 mg/m² Tetramethrin and of 25 mg/m² d-Phenothrin.
- Emulsion 2 B) (component B)), in an amount corresponding to an application dose of 50 mg/m² Tetramethrin and of 25 mg/m² d-Phenothrin.

Table 5 reports the results obtained respectively at the beginning of the treatment (t=0) and after 7 days, 1 month, 3 months, 6 months and 9 months from the beginning of the treatment on glazed tiles.

**Table 5**

| Examples | Knock-down (Kd) and mortality (m) values expressed in % of insects treated on glazed tile - t=time | | | | | | | | | | | |
|---|---|---|---|---|---|---|---|---|---|---|---|---|
| | t=0 | | t 7 days | | t 1 month | | t 3 months | | t 6 months | | t 9 months | |
| | 1h Kd | 24h m | 1h Kd | 24h m | 1h Kd | 24h m | 1h Kd | 24h m | 1h Kd | 24h m | 1h Kd | 24h m |
| Ex. 2 A) | 85 | 100 | 85 | 100 | 80 | 100 | 50 | 100 | 30 | 70 | n.d. | n.d. |
| Ex. 2 B) | 100 | 100 | 100 | 100 | 55 | 60 | 20 | 0 | 0 | 0 | 0 | 0 |
| Ex. 2 C) | 100 | 100 | 100 | 100 | 100 | 100 | 40 | 80 | 30 | 50 | n.d. | n. d |

## Claims

1. Use for professional, domestic, public hygiene applications of formulations consisting of suspo-emulsions comprising: a component A): a microcapsule aqueous suspension, the microcapsules comprising at least one active ingredient selected from the pyrethroid and/or neonicotinoid classes, at least one synergistic agent selected from 5-[2-(2-butoxyethoxy)-ethoxy methyl]-6-propyl-1,3-benzodioxole (piperonylbutoxide-PBO), 5-[2-(2-butoxyethoxy)ethoxymethyl]-6-hexyl-1,3-benzodioxole, [1-(2-butyn-1-yloxy)ethyl]-1,2-dimethoxy benzene 4-(2-ethyl-hexyl)-4-aza-tricycle [5.2.1.0^{2.6}]dec-8-ene-3,5-dione, 5-(but-2-yloxymethyl)-6-propyl-1,3-benzo dioxole, and a component B): an emulsion comprising at least one active ingredient of the above classes, the same or different to the one in the microcapsules and at least the one synergistic agent, the same or different from the one in the microcapsules, the microcapsule shell consisting of polyurea, obtainable by interfacial polymerization of only diphenylmethylen-4,4'-diisocyanate (MDI) optionally in admixture with PAPI and TDI, the formulations having a knockdown effect and a prolonged killing effect, even at three months, even at six and nine months from the application, wherein: the total amount of the microencapsulated components being not higher than 50% by weight with respect to the weight of component A), wherein the active ingredient ranges from 2 to 50% by weight of the sum of the components contained in the microcapsule, the ratio by weight synergistic agent/active ingredient in the microcapsule ranges from 49:1 to 1:1, the complement to 100% by weight of component A) comprising the polymer of the microcapsule wall, water and additives of the suspension; and wherein:
the amount of active ingredient and of the synergistic agent being not higher than 50% by weight of component B), the ratio by weight synergistic agent/active ingredient in the emulsion being in the range 10:1 - 1:1, the complement to 100% by weight of component B) comprising water and additives,
the additives of component A) and B) comprising dispersants and antifreeze agents,
wherein the knock-down and killing effect of the formulations has been determined by using non-resistant insects with the following test:
the insecticidal formulations, prepared by dilution with water, were applied on porous or on non porous surfaces, the insects kept into contact with the treated surface for 1 hour to evaluate the knock-down percentage of insects, afterwards the insects were transferred in an environment free from the insecticide and the mortality % (killing effect) evaluated after 24 hours, repeating then the test after 1, 2, 3, 6 and 9 months from the application with three repetitions each time and for each insect, running an untreated control group for establishing the insect natural mortality.

2. Use according to claim 1 wherein MDI is in admixture with polymethylenpolyphenylisocyanate (PAPI).

3. Use according to claims 1-2 wherein in the microcapsules of component A) the ratio by weight synergistic agent/a.i. ranges from 10:1 to 2:1.

4. Use according to claims 1-3 wherein in the emulsion component B) the ratio by weight synergistic agent/a.i. ranges from 6:1 to 2:1.

5. Use according to claim 1 wherein the synergistic agent is PBO.

6. Use according to claims 1-5 wherein the ratio by weight component A)/component B) ranges from 9/1 to 1/9.

7. Use according to claims 1-6 wherein the average diameter of the microcapsules ranges from 1 to 50 µm.

8. Use according to claims 2-7 wherein polymethylen polyphenylisocyanate (PAPI) has a NCO functionality ranging from 2.3 to 3.

9. Use according to claims 2-8 wherein the amount by weight MDI:PAPI ranges from 100:0 to 20:80.

10. Use according to claims 1-9 wherein in the interfacial polymerization the tolylendiisocyanate (TDI) monomer is used, the ratio by weight MDI:TDI ranges from 10:90 to 100:0.

11. Use according to claims 1-10 wherein the pyrethroids are selected from one or more of the following: Allethrin, d-Allethrin, Bifenthrin, Bioallethrin, Bioresmethrin, Cyfluthrin, β-Cyfluthrin, Cyhalothrin, γ-Cyhalothrin λ-Cyhalothrin, Cyphenothrin, Cypermethrin, α-Cypermethrin, β-Cypermethrin, θ-Cypermethrin, ζ-Cypermethrin, Cyclothrin, Deltamethrin, d-trans Allethrin, Esfenvalerate, Etofenprox, Phenothrin, d-Phenothrin, Fenproprathrin, Fenvalerate, Imiprothrin, Metofluthrin, Permethrin, Prallethrin, Resmethrin, Silafluofen, Tau-fluvalinate, Tetramethrin, d-Tetramethrin, Transfluthrin, pyrethrum extract and their mixtures.

12. Use according to claim 11 wherein the pyrethroids are selected from one or more of the following: d-Allethrin, Bifenthrin, Cyfluthrin, β-Cyfluthrin, λ-Cyhalothrin, Cypermethrin, α-Cypermethrin, Deltamethrin, d-trans Allethrin, Etofenprox, Phenotrin, d-Phenothrin, Imiprothrin, Methofluthrin, Permethrin, Prallethrin, Tetramethrin, d-Tetramethrin, Transfluthrin, pyrethrum extract and their mixtures.

13. Use according to claims 11-12 wherein the pyrethroids are selected from one or more of the following: d-Phenotrin, Prallethrin, Tetramethrin, d-Tetramethrin, Imiprothrin, d-Allethrin, d-trans Allethrin, Cyfluthrin, λ-Cyhalothrin, Deltamethrin, Permethrin, Transfluthrin, pyrethrum extract and their mixtures.

14. Use according to claims 11-13 wherein the pyrethroids are selected from one or more of the following: d-Phenothrin, Prallethrin, Tetramethrin, Imiprothrin, d-Tetramethrin, d-Allethrin, d-trans Allethrin, λ-Cyhalothrin, Deltamethrin, pyrethrum extract and their mixtures.

15. Use according to claims 1-14 wherein the neonicotinoids are selected from one or more of the following: Acetamiprid, Clothianidine, Imidacloprid, Thiacloprid, Thiamethoxam, Dinotefuran and AKD1022 and their mixtures.

16. Use according to claim 15 wherein the neonicotinoids are selected from one or more of the following: Acetamiprid, Imidacloprid, Thiamethoxam, Thiacloprid and their mixtures.

17. Use according to claims 11-16 wherein mixtures of one or more pyrethroids and/or of one or more neonicotinoids are used.

18. Use according to claim 17 wherein the pyrethroids are selected from: d-Phenothrin, Prallethrin, Tetramethrin, d-Tetramethrin, Imiprothrin, Permethrin, d-Allethrin, d-trans Allethrin, λ-Cyhalothrin, Deltamethrin, Cyfluthrin, Transfluthrin; the neonicotinoids are selected from: Acetamiprid, Imidacloprid, Thiamethoxam, Thiacloprid.

19. Use according to claims 1-18 wherein inside the microcapsules one or more pyrethroids and/or one or more neonicotinoids are comprised and outside the microcapsule one or more pyrethroids are present.

20. Use according to claims 1-19 wherein components A) and/or B), besides dispersant and antifreeze agents, comprise additives selected from one or more of the following: photostabilizers, thickeners, antifoam, antimould agents, adhesive agents and organic solvents.

21. Use according to claim 20 wherein photostabilizers are added both in the microcapsules of component A) and in the emulsions component B)

22. Use according to claim 21 wherein photostabilizers are in the emulsion component B).

23. Use according to claim 20 wherein solvents are included in the microcapsules of component A).

24. Use according to claims 20-22 wherein the photostabilizers are selected from benzotriazoles, benzophenones, sterically hindered amines light stabilizers (HALS).

25. Use according to claim 24 wherein the benzotriazoles are selected from: 2-(2'-hydroxy-5-t-octylphenyl) benzotriazole and 2-(2'-hydroxy-3'-t-butyl-5'-methyl phenyl)-S-chloro-benzotriazole; wherein the sterically hindered amines are selected from: di(2,2,6,6-tetramethyl-4-piperinidyl) sebacate; di(1,2,2,6,6-pentamethyl-4-piperidinyl)sebacate; alpha-[[6-[[4,6-bis(dibutylamino)-1,3,5 triazin-2-yl] (2,2,6, 6-tetramethyl-4-piperidinyl) amino] hexyl] (2,2,6,6-tetramethyl-4-piperidinyl) amino]-omega-[4,6-bis (dibutylamino)-1,3,5-triazin-2-yl]-poly[[6-[butyl (2,2,6,6-tetramethyl-4-piperidinyl) amino]-1,3,5-triazin-2,4-diyl] [2,2,6,6 tetramethyl-4-piperidinyl)-imino]-1,6-hexandiyl [2,2, 6,6-tetra methyl-4-piperidinyl)imino]; the dimethylsuccinate polymer with 4-hydroxy-2,2,6,6-tetramethyl-1-piperidinethanol; the polymer of N,N' di(2,2,6,6-tetramethyl-4-piperinidyl)-1,6-hexandiamine with 2,4,6 trichloro-1,3,5-triazine and 1,1,3,3-tetramethyl butylamine; polymethyl propyl-3-oxy(4((2,2,6,6-tetramethy) piperidinyl siloxane; 1,3,5-triazine-2,4,6,-triamine, N,N'[1,2-ethandiyl di[[[4,6-bis [butyl(1,2,2,6,6-pentamethyl-4-piperi-dinyl)amino]-1,3,5-triazine-2-yl]imino]-3,1-propandi-yl]]-di [N',N"-dibutyl- N',N"-bis(1,2,2,6,6-pentamethyl-4-piperidinyl)] or the following mixture: mixture of the dimethylsuccinate polymer with 4-hydroxy-2,2,6,6-tetramethyl-1-piperidin ethanol and the polymer of N,N' di(2,2,6,6-tetramethyl-4-piperinidyl)-1,6-hexandiamine with 2,4,6 trichloro-1,3,5-triazine and 1,1,3,3-tetramethyl butylamine.

26. Use according to claims 24-25 wherein the photostabilizers are selected from di(1,2,2,6,6-pentamethyl-4-piperidinyl) sebacate [41556-26-7] and 2-(2'-hydroxy-3'-t-butyl-5'-methyl phenyl)-5-chloro-benzotriazole 6 [3896-11-5] and their mixtures.

27. Use according to claim 20 wherein the adhesive agents are selected from: polyvinyl pyrrolidone, vinylpyrrolidone/vinylacetate copolymers and sugars.

28. Use according to claims 20 wherein the organic solvents are selected from those having the following properties:
miscibility with the synergistic agent,
effective in solubilizing the active ingredient at room temperature (20°C) at least at a concentration of 1% by weight,
immiscibility with water,
chemical inertia towards the polymer forming the microcapsules.

29. Use according to claim 28 wherein the organic solvents are selected from:
- C₉-C₂₀ alkylbenzenes, or mixtures thereof, wherein the alkyl is linear or branched;
- C₁-C₄ alkyl esters of aliphatic C₃-C₁₄ bicarboxylic acids or mixtures thereof;
- C₃-C₁₀ alkyl esters of aliphatic C₃-C₁₀ carboxylic acids and of aliphatic C₃-C₁₀ hydroxyacids or mixtures thereof;
- methyl esters of C₁₂-C₂₂ saturated or unsaturated fatty acids or mixtures thereof;
- C₇-C₉ alkyl esters of acetic acid or mixtures thereof.

30. Formulations comprising the suspo-emulsions including component A) and component B), according to claims 1-28.

31. A process for preparing the suspo-emulsions of claim 30 comprising component A) and component B), comprising the following steps:
(I) preparation of the microcapsule suspension component A) by the following steps:
a) preparation of an aqueous phase containing at least one dispersant;
b) preparation of an oily phase containing at least one active ingredient selected from the pyrethroid and/or neonicotinoid classes, at least one synergistic agent selected from 5-[2-(2-butoxyethoxy)-ethoxy methyl]-6-propyl-1,3-benzodioxole (piperonylbutoxide-PBO), 5-[2-(2-butoxyethoxy)ethoxymethyl]-6-hexyl-1,3-benzodioxole, [1-(2-butyn-1-yloxy)ethyl]-1,2-dimethoxy benzene, 4-(2-ethyl-hexyl)-4-aza-tricycle [5.2.1.0^{2.6}]dec-8-ene-3,5-dione, 5-(but-2-yloxymethyl)-6-propyl-1,3-benzo dioxole, and diphenylmethylen-4,4'-diisocyanate (MDI) monomer optionally in admixture with PAPI and TDI, to form the polyurea wall of the microcapsules;
c) addition of the oily phase b) to the aqueous phase a),
c') addition of an aqueous phase comprising at least an antifreeze agent,
(II) preparation of the emulsion component B), containing at least one active ingredient selected from the pyrethroid and/or neonicotinoid classes and at least the one synergistic agent by the following steps:
d) solution of the active ingredient in the synergistic agent, addition of a dispersant obtaining a liquid phase premix 1,
e) mixing water with at least one antifreeze agent until complete dispersion with formation of the liquid phase premix 2,
f) addition of premix 1 to premix 2,
to the microcapsule suspension component A) the emulsion component B) is added, obtaining the suspoemulsion C).

## Patentansprüche

1. Verwendung für berufliche, Haushalts- oder öffentliche Hygiene-Anwendungen von Formulierungen, die aus Suspoemulsionen bestehen, welche umfassen:
eine Komponente A):
eine wässrige Mikrokapsel-Emulsion, wobei die Mikrokapseln mindestens einen Wirkstoff, der aus den Pyrethroid- und/oder Neonicotinoid-Klassen ausgewählt ist, und mindestens einen Synergisten umfassen, der ausgewählt ist aus 5-[2-(2-Butoxyethoxy)-ethoxymethyl]-6-propyl-1,3-benzodioxol (Piperonylbutoxid-PBO), 5-[2-(2-Butoxyethoxy)-ethoxymethyl]-6-hexyl-1 ,3-benzodioxol, [1-(2-Butin-1-yloxy)-ethyl]-1,2-dimethoxybenzol, 4-(2-Ethylhexyl)-4-aza-tricyclo[5.2.1.0^{2.6}]dec-8-en-3,5-dion oder 5-(But-2-yloxymethyl)-6-propyl-1,3-benzodioxol, und
eine Komponente B):
eine Emulsion, die mindestens einen Wirkstoff der obigen Klassen, der gleich oder verschieden von demjenigen in den Mikrokapseln ist, und mindestens den einen Synergisten, der gleich oder verschieden von demjenigen in den Mikrokapseln ist, umfasst, wobei die Mikrokapselhülle aus Polyharnstoff besteht, erhältlich durch Grenzflächenpolymerisation von lediglich Diphenylmethylen-4,4'-diisocyanat (MDI), optional mit Beimischung von PAPI und TDI, wobei die Formulierungen eine Knockdown-Wirkung und eine anhaltende Tötungswirkung aufweisen, auch nach sechs und neun Monaten ab der Anwendung, wobei:
die Gesamtmenge der mikroverkapselten Bestandteile nicht höher als 50 Gewichtsprozent ist, bezogen auf das Gewicht der Komponente A), wobei der Wirkstoff im Bereich von 2 bis 50 Gewichtsprozent der Summe der in der Mikrokapsel enthaltenen Bestandteile liegt, das Gewichtsverhältnis Synergist/Wirkstoff in der Mikrokapsel im Bereich von 49:1 bis 1:1 liegt, und die Ergänzung zu 100 Gewichtsprozent der Komponente A) das Polymer der Mikrokapselwand, Wasser und Zusatzstoffe der Suspension umfasst; und wobei:
die Menge des Wirkstoffs und des Synergisten nicht höher als 50 Gewichtsprozent der Komponente B) ist, wobei das Gewichtsverhältnis Synergist/Wirkstoff in der Emulsion im Bereich 10:1 - 1:1 liegt, und die Ergänzung zu 100 Gewichtsprozent der Komponente B) Wasser und Zusatzstoffe umfasst,
wobei die Zusatzstoffe der Komponente A) und B) Dispergiermittel und Gefrierschutzmittel umfassen,
wobei die Knockdown- und Tötungswirkung der Formulierungen unter Verwendung nicht-resistenter Insekten durch den folgenden Test bestimmt worden ist:
die insektiziden Formulierungen, hergestellt durch Verdünnung mit Wasser, wurden auf poröse oder auf nicht-poröse Oberflächen aufgebracht, die Insekten für 1 Stunde in Kontakt mit der behandelten Oberfläche gehalten, um den prozentualen Knockdown-Anteil an Insekten zu bewerten, anschließend wurden die Insekten in eine Umgebung überführt, die frei von dem Insektizid war und die Mortalität in % (Tötungswirkung) wurde nach 24 Stunden bewertet, dann Wiederholen des Tests nach 1, 2, 3, 6 und 9 Monaten ab der Anwendung, mit drei Wiederholungen bei jedem Mal und für jedes Insekt, und Führen einer unbehandelten Kontrollgruppe, um die natürliche Insektenmortalität festzustellen.

2. Verwendung nach Anspruch 1, wobei MDI mit Beimischung von Polymethylenpolyphenylisocyanat (PAPI) vorliegt.

3. Verwendung nach den Ansprüchen 1 bis 2, wobei in den Mikrokapseln der Komponente A) das Gewichtsverhältnis Synergist/Wirkstoff im Bereich von 10:1 bis 2:1 liegt.

4. Verwendung nach den Ansprüchen 1 bis 3, wobei in der Emulsionskomponente B) das Gewichtsverhältnis Synergist/Wirkstoff im Bereich von 6:1 bis 2:1 liegt.

5. Verwendung nach Anspruch 1, wobei der Synergist PBO ist.

6. Verwendung nach den Ansprüchen 1 bis 5, wobei das Gewichtsverhältnis Komponente A) / Komponente B) im Bereich von 9/1 bis 1/9 liegt.

7. Verwendung nach den Ansprüchen 1 bis 6, wobei der mittlere Durchmesser der Mikrokapseln im Bereich von 1 bis 50 µm liegt.

8. Verwendung nach den Ansprüchen 2 bis 7, wobei Polymethylenpolyisocyanat (PAPI) eine NCO-Funktionalität aufweist, die im Bereich von 2,3 bis 3 liegt.

9. Verwendung nach den Ansprüchen 2 bis 8, wobei das Gewichtsverhältnis MDI:PAPI im Bereich von 100:0 bis 20:80 liegt.

10. Verwendung nach den Ansprüchen 1 bis 9, wobei in der Grenzflächenpolymerisation das Toluoldiisocyanat (TDI)-Monomer verwendet wird, und das Gewichtsverhältnis MDI:TDI im Bereich von 10:90 bis 100:0 liegt.

11. Verwendung nach den Ansprüchen 1 bis 10, wobei die Pyrethroide aus einem oder mehreren der folgenden ausgewählt sind: Allethrin, d-Allethrin, Bifenthrin, Bioallethrin, Bioresmethrin, Cyfluthrin, β-Cyfluthrin, Cyhalothrin, γ-Cyhalothrin. A-Cyhalothrin, Cyphenothrin, Cypermethrin, α-Cypermethrin, β-Cypermethrin, Θ-Cypermethrin, ζ-Cypermethrin, Cyclothrin, Deltamethrin, d-trans-Allethrin, Esfenvalerat, Etofenprox, Phenothrin, d-Phenothrin, Fenproprathrin, Fenvalerat, Imiprothrin, Metofluthrin, Permethrin, Prallethrin, Resmethrin, Silafluofen, Tau-Fluvalinat, Tetramethrin, d-Tetramethrin, Transfluthrin, Pyrethrumextrakt und deren Gemische.

12. Verwendung nach Anspruch 11, wobei die Pyrethroide aus einem oder mehreren der folgenden ausgewählt sind: d-Allethrin, Bifenthrin, Cyfluthrin, β-Cyfluthrin, A-Cyhalothrin, Cypermethrin, α-Cypermethrin, Deltamethrin, d-trans-Allethrin, Etofenprox, Phenothrin, d-Phenothrin, Imiprothrin, Metofluthrin, Permethrin, Prallethrin, Tetramethrin, d-Tetramethrin, Transfluthrin, Pyrethrumextrakt und deren Gemische.

13. Verwendung nach den Ansprüchen 11 bis 12, wobei die Pyrethroide aus einem oder mehreren der folgenden ausgewählt sind: d-Phenothrin, Prallethrin, Tetramethrin, d-Tetramethrin, Imiprothrin, d-Allethrin, d-trans-Allethrin, Cyfluthrin, λ-Cyhalothrin, Deltamethrin, Permethrin, Transfluthrin, Pyrethrumextrakt und deren Gemische.

14. Verwendung nach den Ansprüchen 11 bis 13, wobei die Pyrethroide aus einem oder mehreren der folgenden ausgewählt sind: d-Phenothrin, Prallethrin, Tetramethrin, Imiprothrin, d-Tetramethrin, d-Allethrin, d-trans-Allethrin, λ-Cyhalothrin, Deltamethrin, Pyrethrumextrakt und deren Gemische.

15. Verwendung nach den Ansprüchen 1 bis 14, wobei die Neonicotinoide aus einem oder mehreren der folgenden ausgewählt sind: Acetamiprid, Clothianidin, Imidacloprid, Thiacloprid, Thiamethoxam, Dinotefuran und AKD1022 und deren Gemische.

16. Verwendung nach Anspruch 15, wobei die Neonicotinoide aus einem oder mehreren der folgenden ausgewählt sind: Acetamiprid, Imidacloprid, Thiamethoxam, Thiacloprid und deren Gemische.

17. Verwendung nach den Ansprüchen 11 bis 16, wobei Gemische eines oder mehrerer Pyrethroide und/oder eines oder mehrerer Neonicotinoide verwendet werden.

18. Verwendung nach Anspruch 17, wobei die Pyrethroide ausgewählt sind aus: d-Phenothrin, Prallethrin, Tetramethrin, d-Tetramethrin, Imiprothrin, Permethrin, d-Allethrin, d-trans-Allethrin, λ-Cyhalothrin, Deltamethrin, Cyfluthrin, Transfluthrin; die Neonicotinoide ausgewählt sind aus: Acetamiprid, Imidacloprid, Thiamethoxam, Thiacloprid.

19. Verwendung nach den Ansprüchen 1 bis 18, wobei innerhalb der Mikrokapseln ein oder mehrere Pyrethroide und/oder ein oder mehrere Neonicotinoide enthalten sind und außerhalb der Mikrokapseln ein oder mehrere Pyrethroide vorhanden sind.

20. Verwendung nach den Ansprüchen 1 bis 19, wobei die Komponenten A) und/oder B), neben Dispergiermittel und Gefrierschutzmitteln, Zusatzstoffe umfassen, die aus einem oder mehreren der folgenden ausgewählt sind: Photostabilisatoren, Verdickungsmittel, Entschäumer, Mittel gegen Schimmel, Haftmittel und organische Lösemittel.

21. Verwendung nach Anspruch 20, wobei sowohl in den Mikrokapseln der Komponente A) als auch in der Emulsionskomponente B) Photostabilisatoren zugegeben sind.

22. Verwendung nach Anspruch 21, wobei Photostabilisatoren in der Emulsionskomponente B) sind.

23. Verwendung nach Anspruch 20, wobei in den Mikrokapseln der Komponente A) Lösemittel enthalten sind.

24. Verwendung nach den Ansprüchen 20 bis 22, wobei die Photostabilisatoren aus Benzotriazolen, Benzophenonen und sterisch gehinderten Amin-Lichtstabilisatoren (HALS) ausgewählt sind.

25. Verwendung nach Anspruch 24, wobei die Benzotriazole ausgewählt sind aus: 2-(2'-Hydroxy-5-t-octylphenyl)benzotriazol and 2-(2'-Hydroxy-3'-t-butyl-5'-methylphenyl)-5-chlor-benzotriazol;
wobei die sterisch gehinderten Amine ausgewählt sind aus: Di(2,2,6,6-tetramethyl-4-piperinidyl)sebacat; Di(1,2,2,6,6-pentamethyl-4-piperidinyl)sebacat; alpha-[[6-[[4,6-Bis(dibutylamino)-1,3,5-triazin-2-yl]-(2,2,6,6-tetramethyl-4-piperidinyl)amino]hexyl]-(2,2,6,6-tetramethyl-4-piperidinyl)amino]-omega-[4,6-bis(dibutylamino)-1,3,5-triazin-2-yl]-poly[[6-[butyl(2,2,6,6-tetramethyl-4-piperidinyl)amino]-1,3,5-triazin-2,4-diyl]-[2,2,6,6 tetramethyl-4-piperidinyl)-imino]-1,6-hexandiyl[2,2,6,6-tetramethyl-4-piperidinyl)imino]; dem Dimethylsuccinat-Polymer mit 4-Hydroxy-2,2,6,6-tetramethyl-1-piperidinethanol; dem Polymer von N,N'-Di(2,2,6,6-tetramethyl-4-piperinidyl)-1,6-hexandiamin mit 2,4,6-Trichlor-1,3,5-triazin und 1,1,3,3-Tetramethylbutylamin; Polymethylpropyl-3-oxy(4-((2,2,6,6-tetramethyl)piperidinylsiloxan; 1,3,5-Triazin-2,4,6-triamin, N,N'-[1,2-ethandiyl-di[[[4,6-bis[butyl(1,2,2,6,6-pentamethyl-4-piperidinyl)amino]-1,3,5-triazin-2-yl]imino]-3,1-propandi-yl]]-di[N',N"-dibutyl-N',N"-bis(1,2,2,6,6-pentamethyl-4-piperidinyl)] oder dem folgenden Gemisch: Gemisch des Dimethylsuccinat-Polymers mit 4-Hydroxy-2,2,6,6-tetramethyl-1-piperidin-ethanol und des Polymers von N,N'-Di(2,2,6,6-tetramethyl-4-piperinidyl)-1,6-hexandiamin mit 2,4,6-Trichlor-1,3,5-triazin und 1,1,3,3-Tetramethylbutylamin.

26. Verwendung nach den Ansprüchen 24 bis 25, wobei die Photostabilisatoren aus Di(1,2,2,6,6-pentamethyl-4-piperidinyl)sebacat [41556-26-7] und 2-(2'-Hydroxy-3'-t-butyl-5'-methylphenyl)-5-chlorbenzotriazol [3896-11-5] und deren Gemischen ausgewählt sind.

27. Verwendung nach Anspruch 20, wobei die Haftmittel ausgewählt sind aus: Polyvinylpyrrolidon, Vinylpyrrolidon/Vinylacetat-Copolymeren und Zuckern.

28. Verwendung nach Anspruch 20, wobei die organischen Lösemittel aus denjenigen ausgewählt sind, welche die folgenden Eigenschaften besitzen:
Mischbarkeit mit dem Synergisten,
wirksam beim Solubilisieren des Wirkstoffes bei Raumtemperatur (20°C) zumindest bei einer Konzentration von 1 Gewichtsprozent,
Unmischbarkeit mit Wasser,
chemisch inert gegenüber dem Polymer, das die Mikrokapseln bildet.

29. Verwendung nach Anspruch 28, wobei die organischen Lösemittel ausgewählt sind aus:
- C₉-C₂₀-Alkylbenzolen oder Gemischen derselben, wobei das Alkyl linear oder verzweigt ist;
- C₁-C₄-Alkylestern aliphatischer C₃-C₁₄-Dicarbonsäuren oder Gemischen derselben;
- C₃-C₁₀-Alkylestern aliphatischer C₃-C₁₀-Carbonsäuren und aliphatischer C₃-C₁₀-Hydroxysäuren oder Gemischen derselben;
- Methylestern gesättigter oder ungesättigter C₁₂-C₂₂-Fettsäuren oder Gemischen derselben;
- C₇-C₉-Alkylestern von Essigsäure oder Gemischen derselben.

30. Formulierungen, welche die Komponente A) und Komponente B) enthaltenden Suspoemulsionen nach den Ansprüchen 1 bis 28 umfassen.

31. Verfahren zur Herstellung der Komponente A) und Komponente B) umfassenden Suspoemulsion nach Anspruch 30, welches die folgenden Schritte umfasst:
(I) Herstellung der Mikrokapsel-Emulsions-Komponente A) durch die folgenden Schritte:
a) Herstellung einer wässrigen Phase, die mindestens ein Dispergiermittel enthält;
b) Herstellung einer öligen Phase, enthaltend mindestens einen Wirkstoff, der aus den Pyrethroid- und/oder Neonicotinoid-Klassen ausgewählt ist, mindestens einen Synergisten, der aus 5-[2-(2-Butoxyethoxy)-ethoxymethyl]-6-propyl-1,3-benzodioxol (Piperonylbutoxid-PBO), 5-[2-(2-Butoxyethoxy)-ethoxymethyl]-6-hexyl-1,3-benzodioxol, [1-(2-Butin-1-yloxy)-ethyl]-1,2-dimethoxybenzol, 4-(2-Ethylhexyl)-4-aza-tricyclo[5.2.1.0^{2.6}]dec-8-en-3,5-dion oder 5-(But-2-yloxymethyl)-6-propyl-1,3-benzodioxol ausgewählt ist, und Diphenylmethylen-4,4'-diisocyanat (MDI)-Monomer, optional mit Beimischung von PAPI und TDI, um die Polyharnstoff-Wand der Mikrokapseln zu bilden;
c) Zugabe der öligen Phase b) zu der wässrigen Phase a),
c') Zugabe einer wässrigen Phase, die zumindest ein Gefrierschutzmittel umfasst,
(II) Herstellung der Emulsionskomponente B), die mindestens einen Wirkstoff, der aus den Pyrethroid- und/oder Neonicotinoid-Klassen ausgewählt ist, und mindestens den einen Synergisten enthält, durch die folgenden Schritte:
d) Lösen des Wirkstoffs in dem Synergisten, Zugeben eines Dispergiermittels, Erhalten einer Flüssigphasen-Vormischung 1,
e) Vermischen von Wasser mit mindestens einem Gefrierschutzmittel bis zur vollständigen Dispersion unter Bildung der Flüssigphasen-Vormischung 2,
f) Zugeben der Vormischung 1 zur Vormischung 2,
zur Mikrokapsel-Suspensions-Komponente A) wird die Emulsions-Komponente B) zugegeben, und die Suspoemulsion C) wird erhalten.

## Revendications

1. Utilisation pour des applications professionnelles, domestiques, d'hygiène publique de formulations constituées de suspo-émulsions comprenant :
un composant A) :
une suspension aqueuse de microcapsules,
les microcapsules comprenant au moins un ingrédient actif sélectionné parmi les classes des pyréthrioïdes et/ou des néonicotinoïdes, au moins un agent synergique sélectionné parmi 5-[2-(2-butoxyéthoxy)-éthoxyméthyl]-6-propyl-1,3-benzodioxole (piperonylbutoxide-PBO), 5-[2-(2-butoxyéthoxy)éthoxyméthyl]-6-héxyl-1,3-benzodioxole, [1-(2-butyn-1-yloxy)éthyl]-1,2-diméthoxybenzène, 4-(2-éthyl-héxyl)-4-aza-tricycle [5.2.1 .0^{2.6}]dec-8-ene-3,5-dione, 5-(but-2-yloxyméthyl) - 6-propyl-1, 3-benzodioxole, et
un composant B) :
une émulsion comprenant au moins un ingrédient actif des classes précédentes, égal ou différent à celui dans les microcapsules et au moins l'un agent synergique,
égal ou différent de celui dans les microcapsules, l'enveloppe de microcapsule étant constituée de polyurée, pouvant être obtenue par polymérisation interfaciale du seul 4,4'-diisocyanate de diphénylméthylène (MDI), facultativement en mélange avec du PAPI et du TDI, les formulations ayant un effet étourdissant et un effet létal prolongé, même à trois mois, même à six et neuf mois de l'application, dans laquelle :
la quantité totale des composants microencapsulés n'étant pas supérieure à 50 % en poids par rapport au poids du composant A), dans laquelle l'ingrédient actif varie de 2 à 50 % en poids de la somme des composants contenus dans la microcapsule, le rapport en poids agent synergique/ingrédient actif dans la microcapsule varie de 49:1 à 1:1, le complément pour obtenir 100 % en poids du composant A) comprenant le polymère de la paroi de microcapsule, de l'eau et des additifs de la suspension ;
et dans laquelle :
la quantité d'ingrédient actif et de l'agent synergique n'étant pas supérieure à 50 % en poids du composant B), le rapport en poids agent synergique/ingrédient actif dans l'émulsion étant dans la plage 10:1-1:1, le complément pour obtenir 100 % en poids du composant B) comprenant de l'eau et des additifs,
les additifs des composants A) et B) comprenant des dispersants et des agents antigel,
dans laquelle l'effet étourdissant et létal des formulations a été déterminé en utilisant des insectes non résistants avec le test suivant :
les formulations insecticides, préparées par dilution avec de l'eau, ont été appliquées sur des surfaces poreuses ou non poreuses, les insectes gardés en contact avec la surface traitée pendant 1 heure pour évaluer le pourcentage d'insectes étourdis, ensuite les insectes ont été transférés dans un environnement dépourvu d'insecticide et le pourcentage de mortalité (effet létal) évalué après 24 heures, en répétant ensuite le test après 1, 2, 3, 6 et 9 mois de l'application avec à chaque fois et pour chaque insecte trois répétitions, en utilisant un groupe témoin non traité pour établir la mortalité naturelle des insectes.

2. Utilisation selon la revendication 1 dans laquelle le MDI est en mélange avec du isocyanate de polyphényle polyméthylène (PAPI).

3. Utilisation selon les revendications 1-2 dans laquelle dans les microcapsules du composant A) le rapport en poids agent synergique/ingrédient actif varie de 10:1 à 2:1.

4. Utilisation selon les revendications 1-3 dans laquelle dans le composant d'émulsion B) le rapport en poids agent synergique/ingrédient actif varie de 6:1 à 2:1.

5. Utilisation selon la revendication 1 dans laquelle l'agent synergique est du PBO.

6. Utilisation selon les revendications 1-5 dans laquelle dans le rapport en poids composant A)/composant B) varie de 9/1 à 1/9.

7. Utilisation selon les revendications 1-6 dans laquelle le diamètre moyen des microcapsules varie de 1 à 50 µm.

8. Utilisation selon les revendications 2-7 dans laquelle du isocyanate de polyphényle polyméthylène (PAPI) a une fonctionnalité NCO allant de 2,3 à 3.

9. Utilisation selon les revendications 2-8 dans laquelle la quantité en poids MDI:PAPI varie de 100:0 à 20:80.

10. Utilisation selon les revendications 1-9 dans laquelle dans la polymérisation interfaciale est utilisé le monomère de diisocyanate de toluène (TDI), le rapport en poids MDI:TDI varie de 10:90 à 100:0.

11. Utilisation selon les revendications 1-10 dans laquelle les pyréthrioïdes sont sélectionnés parmi l'un ou plusieurs des éléments suivants : Alléthrine, d-Alléthrine, Bifenthrine, Bioalléthrine, Bioresméthrine, Cyfluthrine, β-Cyfluthrine, Cyhalothrine, γ-Cyhalothrine, λ-Cyhalothrine, Cyphénothrine, Cyperméthrine, α-Cyperméthrine, β-Cyperméthrine, θ-Cyperméthrine, ζ-Cyperméthrine, Cyclothrine, Deltaméthrine, d-trans Alléthrine, Esfenvalérate, Etofenprox, Phénothrine, d-Phénothrine, Fenproprathrine, Fenvalérate, Imiprothrine, Métofluthrine, Perméthrine, Prallethrine, Resmethrine, Silafluofen, Tau-fluvalinate, Tétraméthrine, d-tétraméthrine, Transfluthrine, extrait de pyrèthre et leurs mélanges.

12. Utilisation selon la revendication 11 dans laquelle les pyréthrioïdes sont sélectionnés parmi l'un ou plusieurs des éléments suivants : d-Alléthrine, Bifenthrine, Cyfluthrine, β-Cyfîuthrine, λ-Cyhalothrine, Cyperméthrine, α-Cyperméthrine, Deltaméthrine, d-trans Alléthrine, Etofenprox, Phénothrine, d-Phénothrine, Imiprothrine, Métofluthrine, Perméthrine, Prallethrine, Tétraméthrine, d-Tétraméthrine, Transfluthrine, extrait de pyrèthre et leurs mélanges.

13. Utilisation selon les revendications 11-12 dans laquelle les pyréthrioïdes sont sélectionnés parmi l'un ou plusieurs des éléments suivants : d-Phénothrine, Prallethrine, Tétraméthrine, d-Tétraméthrine, Imiprothrine, d-Alléthrine, d-trans Alléthrine, Cyfluthrine, λ-Cyhalothrine, Deltaméthrine, Perméthrine, Transfluthrine, extrait de pyrèthre et leurs mélanges.

14. Utilisation selon les revendications 11-13 dans laquelle les pyréthrioïdes sont sélectionnés parmi l'un ou plusieurs des éléments suivants : d-Phénothrine, Prallethrine, Tétraméthrine, Imiprothrine, d-Tétraméthrine, d-Alléthrine, d-trans Alléthrine, λ-Cyhalothrine, Deltaméthrine, extrait de pyrèthre et leurs mélanges.

15. Utilisation selon les revendications 1-14 dans laquelle les néonicotinoïdes sont sélectionnés parmi l'un ou plusieurs des éléments suivants : Acétamipride, Clothianidine, Imidaclopride, Thiaclopride, Thiaméthoxame, Dinotéfurane et AKD1022 et leurs mélanges.

16. Utilisation selon la revendication 15 dans laquelle les néonicotinoïdes sont sélectionnés parmi l'un ou plusieurs des éléments suivants : Acétamipride, Imidaclopride, Thiaméthoxame, Thiaclopride et leurs mélanges.

17. Utilisation selon les revendications 11-16 dans laquelle des mélanges d'un ou plusieurs pyréthrioïdes et/ou d'un ou plusieurs néonicotinoïdes sont utilisés.

18. Utilisation selon la revendication 17 dans laquelle les pyréthrioïdes sont sélectionnés parmi : d-Phénothrine, Prallethrine, Tétraméthrine, d-Tétraméthrine, Imiprothrine, Perméthrine, d-Alléthrine, d-trans Alléthrine, λ-Cyhalothrine, Deltaméthrine, Cyfluthrine, Transfluthrine ; les néonicotinoïdes sont sélectionnés parmi : Acétamipride, Imidaclopride, Thiaméthoxame, Thiaclopride.

19. Utilisation selon les revendications 1-18 dans laquelle à l'intérieur des microcapsules sont compris un ou plusieurs pyréthrioïdes et/ou un ou plusieurs néonicotinoïdes et à l'extérieur de la microcapsule sont présents un ou plusieurs pyréthrioïdes.

20. Utilisation selon les revendications 1-19 dans laquelle les composants A) et/ou B), à part des agents dispersants et antigel, comprennent des additifs sélectionnés parmi l'un ou plusieurs des éléments suivants : des photostabilisateurs, des épaississants, des antimousses, des agents antifongiques, des agents adhésifs et des solvants organiques.

21. Utilisation selon la revendication 20 dans laquelle des photostabilisateurs sont ajoutés à la fois dans les microcapsules du composant A) et dans le composant d'émulsion B)

22. Utilisation selon la revendication 21 dans laquelle des photostabilisateurs sont dans le composant d'émulsion B).

23. Utilisation selon la revendication 20 dans laquelle des solvants sont inclus dans les microcapsules du composant A).

24. Utilisation selon les revendications 20-22 dans laquelle les photostabilisateurs sont sélectionnés parmi des benzotriazoles, des benzophénones, des stabilisateurs de lumière à base d'amines à empêchement stérique (HALS).

25. Utilisation selon la revendication 24 dans laquelle les benzotriazoles sont sélectionnés parmi : 2-(2'-hydroxy-5-t-octylphényl)benzotriazole et 2-(2'-hydroxy-3'-t-butyl-5'-méthylphényl)-5-chloro-benzotriazole ;
dans laquelle les amines à empêchement stérique sont sélectionnées parmi : di(2,2,6,6-tétraméthyl-4-piperinidyl)sébacate ; di(1,2,2,6,6-pentaméthyl-4-piperidinyl)sébacate ; alpha-[[6-[[4,6-bis(dibutylamino)-1,3,5-triazin-2-yl] (2,2,6,6-tétraméthyl-4-piperidinyl)amino]héxyl] (2,2,6,6-tétraméthyl-4-piperidinyl)amino]-omega-[4,6-bis(dibutylamino)-1,3,5-triazin-2-yl]-poly[[6-[butyl(2,2,6,6-tétraméthyl-4-piperidinyl)amino]-1,3,5-triazin-2,4-diyl] [2,2,6,6 tétraméthyl-4-piperidinyl)-imino]-1,6-hexandiyl [2,2,6,6-tétraméthyl-4-piperidinyl)imino] ; le polymère de diméthylsuccinate avec 4-hydroxy-2,2,6,6-tétraméthyl-1-piperidinéthanol ; le polymère de N,N' di(2,2,6,6-tétraméthyl-4-piperinidyl)-1,6-hexandiamine avec 2,4,6 trichloro-1,3,5-triazine et 1,1,3,3-tétraméthylbutylamine ; polyméthyl propyl-3-oxy(4((2,2,6,6-tétraméthyl) piperidinylsiloxane ; 1,3,5-triazine-2,4,6,-triamine, N,N'[1,2-éthandiyl di[[[4,6-bis[butyl(1,2,2,6,6-pentaméthyl-4-piperi-dinyl)amino]-1,3,5-triazine-2-yl]imino]-3,1-propandi-yl]]-di[N',N"-dibutyl-N',N"-bis(1,2,2,6,6-pentaméthyl-4-piperidinyl)] ou le mélange suivant : mélange du polymère de diméthylsuccinate avec 4-hydroxy-2,2,6,6-tétraméthyl-1-piperidinéthanol et le polymère de N,N' di(2,2,6,6-tétraméthyl-4-piperinidyl)-1,6-hexandiamine avec 2,4,6 trichloro-1,3,5-triazine et 1,1,3,3-tétraméthylbutylamine.

26. Utilisation selon les revendications 24-25 dans laquelle les photostabilisateurs sont sélectionnés parmi di(1,2,2,6,6-pentaméthyl-4-piperidinyl)sébacate [41556-26-7] et 2-(2'-hydroxy-3'-t-butyl-5'-méthylphenyl)-5-chloro-benzotriazole 6 [3896-11-5] et leurs mélanges.

27. Utilisation selon la revendication 20 dans laquelle les agents adhésifs sont sélectionnés parmi : polyvinylpyrrolidone, copolymères de vinylpyrrolidone/acétate de vinyle et sucres.

28. Utilisation selon la revendication 20 dans laquelle les solvants organiques sont sélectionnés parmi ceux ayant les propriétés suivantes :
miscibilité avec l'agent synergique,
efficaces dans la solubilisation de l'ingrédient actif à température ambiante (20 °C) au moins dans une concentration d'1 % en poids,
immiscibilité avec l'eau,
inertie chimique vis-à-vis du polymère formant les microcapsules.

29. Utilisation selon la revendication 28 dans laquelle les solvants organiques sont sélectionnés parmi :
- alkylbenzènes C₉-C₂₀, ou leurs mélanges, dans laquelle l'alkyle est linéaire ou ramifié ;
- esters alkyliques C₁-C₄ d'acides dicarboxyliques C₃-C₁₄ aliphatiques ou leurs mélanges ;
- esters alkyliques C₃-C₁₀ d'acides carboxyliques C₃-C₁₀ aliphatiques et d'hydroxyacides C₃-C₁₀ aliphatiques ou leurs mélanges ;
- esters méthyliques d'acides gras C₁₂-C₂₂ saturés ou insaturés ou leurs mélanges ;
- esters alkyliques C₁-C₉ d'acides acétiques ou leurs mélanges.

30. Formulations comprenant les suspo-émulsions incluant le composant A) et le composant B), selon les revendications 1-28.

31. Procédé pour préparer les suspo-émulsions de la revendication 30 comprenant le composant A) et le composant B), comprenant les étapes suivantes :
(I) préparation du composant de suspension de microcapsules A) par les étapes suivantes :
a) préparation d'une phase aqueuse contenant au moins un dispersant ;
b) préparation d'une phase huileuse contenant au moins un ingrédient actif sélectionné parmi les classes des pyréthrioïdes et/ou néonicotinoïdes, au moins un agent synergique sélectionné parmi 5-[2-(2-butoxyéthoxy)-éthoxyméthyl]-6-propyl-1,3-benzodioxole (piperonylbutoxide-PBO), 5-[2-(2-butoxyéthoxy)éthoxyméthyl]-6-héxyl-1,3-benzodioxole, [1-(2-butyn-1-yloxy)éthyl]-1,2-diméthoxybenzène, 4-(2-éthyl-héxyl)-4-aza-tricycle [5.2.1.0^{2.6}] dec-8-ene-3,5-dione, 5-(but-2-yloxyméthyl)-6-propyl-1,3-benzodioxole, et monomère de 4,4'-diisocyanate de diphénylméthylène (MDI) facultativement en mélange avec du PAPI et du TDI pour former la paroi de polyurée des microcapsules ;
c) ajout de la phase huileuse b) à la phase aqueuse a),
c') ajout d'une phase aqueuse comprenant au moins un agent antigel,
(II) préparation du composant d'émulsion B), contenant au moins un ingrédient actif sélectionné parmi les classes des pyréthrioïdes et/ou des néonicotinoïdes et au moins un agent synergique par les étapes suivantes :
d) solution de l'ingrédient actif dans l'agent synergique, ajout d'un dispersant obtenant un prémélange de phase liquide 1,
e) mélanger de l'eau avec au moins un agent antigel jusqu'à complète dispersion avec formation du prémélange de phase liquide 2,
f) ajout du prémélange 1 au prémélange 2,
le composant d'émulsion B) est ajouté au composant de suspension de microcapsules A), obtenant la suspo-émulsion C).
